# EUROPÄISCHE PATENTSCHRIFT

(11) **EP 2 499 884 B1**
(45) Veröffentlichungstag und Bekanntmachung des Hinweises auf die Patenterteilung: **21.02.2018**
(21) Anmeldenummer: 10796260.7
(22) Anmeldetag: 11.11.2010
(51) Int. Cl.: H05B 37/02

(54) **BELEUCHTUNGSVORRICHTUNG UND BELEUCHTUNGSSYSTEM**
LIGHTING DEVICE AND LIGHTING SYSTEM
DISPOSITIF D'ÉCLAIRAGE ET SYSTÈME D'ÉCLAIRAGE

(30) Priorität: 11.11.2009 AT 17892009
(43) Veröffentlichungstag der Anmeldung: 19.09.2012
(73) Patentinhaber: Illumination Network Systems GmbH, 1040 Wien (AT)
(72) Erfinder: VÁCLAVIK, Premysl, 1040 Wien (AT); KERNBICHLER, Martin, 2372 Gießhübl (AT)
(74) Vertreter: Puchberger & Partner Patentanwälte
(86) Internationale Anmeldenummer: PCT/AT2010/000433
(87) Internationale Veröffentlichungsnummer: WO 2011/057313

(56) Entgegenhaltungen:
- WO-A1-2006/038169
- WO-A1-2006/056814
- US-A1- 2003 122 507
- US-A1- 2006 071 605

## Beschreibung

Die Erfindung betrifft ein Beleuchtungssystem mit zumindest einer Beleuchtungsvorrichtung umfassend zumindest eine Leuchte, wobei der zumindest einen Leuchtvorrichtung zumindest eine Sensorvorrichtung zur Detektion von Objekten zugeordnet ist, welche der Beleuchtungsvorrichtung Informationen zum Steuern der zumindest einen Leuchte liefert.

Weiters betrifft die Erfindung noch ein Verfahren zum Beleuchten einer zu beleuchtenden Örtlichkeit und Objekten mit einem oben genannten Beleuchtungssystem.

Derzeit werden Leuchten durch eine direkte externe Steuerung eingeschaltet. Eine Quelle für eine solche direkte Steuerung kann beispielsweise ein Bewegungsmelder, ein akustischer Sensor, ein Zeitschalter oder ein Fernsteuerungssignal sein. Die Lichtintensität, welche auf diese Weise gesteuerte Leuchten abstrahlen, ist unabhängig von dem Objekttyp (z.B. Fahrzeug, Fußgänger, ...), welcher sich in einer Umgebung der Leuchte aufhält oder bewegt. Unabhängig davon, ob etwa ein Fußgänger, ein PKW oder ein LKW von einem Bewegungsmelder oder einem akustischen Sensor detektiert wird, wird die Leuchte einfach eingeschaltet, unabhängig von Position, Geschwindigkeit oder Bewegungsrichtung des Objektes.

Herkömmliche, bekannte Leuchten exekutieren somit nur ein Steuersignal. Falls dieses Steuersignal auch Lichtintensitätsinformation beinhaltet, wird auch die Lichtintensität der Leuchte entsprechend eingestellt.

Das Ausschalten der Leuchte findet direkt oder durch eine Zeitintervallschaltung unabhängig vom Objekt oder Objekten, die sich in der Nähe der Leuchte befinden, insbesondere unabhängig von der Position des Objektes, dessen Geschwindigkeit oder Bewegungsrichtung statt.

Außerdem erfolgt bei diesen bekannten Leuchten eine Steuerung einfach dahingehend, dass ab der Detektion eines Objektes die Leuchte-zumeist mit der vollen Leuchtstärke-eingeschaltet wird.

Die US 2006/071605 A1 zeigt eine Beleuchtungsvorrichtung, umfassend eine Leuchte, der eine Sensorvorrichtung zur Detektion der Position von Objekten zugeordnet ist, welche der Beleuchtungsvorrichtung Informationen zum Steuern der Leuchte liefert. Die Sensorvorrichtung ist ferner dazu eingerichtet, die Aktivität des Objektes, bei dem es sich um eine Person handelt, zu detektieren, und die Beleuchtungsvorrichtung ist ferner dazu eingerichtet, abhängig von der Aktivität des Objektes die Leuchte entsprechend zu steuern.

Aus WO 2006/038169 A1 ist eine Beleuchtungsvorrichtung bekannt, die eine Leuchte umfasst und der eine Sensorvorrichtung zur Detektion von Personen zugeordnet ist. Die Sensorvorrichtung liefert der Beleuchtungsvorrichtung Informationen zum Steuern der Leuchte in Abhängigkeit von Aktivitäten der Personen im Bereich der Sensorvorrichtung.

Die US 2003/0122507 A1 zeigt eine Beleuchtungsvorrichtung umfassend eine Leuchte und eine Sensorvorrichtung zur Detektion von Objekten, welche der Beleuchtungsvorrichtung Informationen zum Steuern der Leuchte liefert.

Die WO 2006/056814 A1 zeigt eine Steuerungsvorrichtung zur Steuerung einer Leuchte mit einer Sensorvorrichtung, wobei die Steuerungsvorrichtung dazu eingerichtet ist, die Leuchte als Reaktion auf eine Bewegung eines detektierten Objektes zu steuern.

Es ist eine Aufgabe der Erfindung, ein wesentlich verbessertes Beleuchten von zu beleuchtenden Örtlichkeiten und Objekten zu ermöglichen, welches eine Energieersparnis bietet und gegebenenfalls auch eine subjektiv als angenehmer empfundene Beleuchtung bietet.

Diese Aufgabe wird mittels eines Beleuchtungssystems gemäß Patentanspruch 1 gelöst.

Mit der erfindungsgemäßen Beleuchtungsvorrichtung wird eine autonome Einstellung der Lichtintensität/Lichtstärke der einen oder mehreren Leuchten einer Beleuchtungsvorrichtung abhängig vom Typ des detektierten Objektes (= Objekttyp) und/oder der Entfernung des Objektes zu der Beleuchtungsvorrichtung bzw. den Leuchten möglich.

Grundsätzlich misst die Sensorvorrichtung die Entfernung eines Objektes zu der Sensorvorrichtung selbst, diese Information kann dann von der Beleuchtungsvorrichtung einfach auf die Entfernung des Objektes zu der einen oder den mehreren Leuchten der Beleuchtungsvorrichtung umgerechnet werden, was insbesondere dann von Bedeutung ist, wenn die Beleuchtungsvorrichtung externe Leuchten umfasst (siehe dazu auch den Text weiter unten). Bevorzugt misst die Sensorvorrichtung auch noch die Bewegungsrichtung und/oder Geschwindigkeit.

An dieser Stelle sei auch noch ausgeführt, dass es sich bei den Objekten um ein nicht genauer klassifiziertes Objekt aber auch um unterschiedlichste Objekte wie Personenkraftwagen, Lastkraftwagen, Motorräder, etc., aber auch um Subjekte wie Personen handeln kann, welche hier alle als "Objekte" bezeichnet werden. Ebenso kann es sich um nicht genauer klassifizierte Objekte handeln. Die Klassifizierung in "Objekttypen" kann der obigen Einteilung Personenkraftwagen - Lastkraftwagen - Motorräder - Personen (Fußgänger) - ..... folgen, eine Klassifizierung in Objekttypen kann auch nach Größe der Objekte, nach deren Geschwindigkeit etc. erfolgen, oder es kann eine Mischklassifizierung erfolgen (z.B. schneller PKW, langsamer PKW, ... könnten ebenfalls jeweils eigene Objekttypen darstellen).

Bei den "nicht näher klassifizierten" Objekten handelt es sich um Objekte, deren Objekttyp eine Beleuchtungsvorrichtung nicht kennt, oder deren Objekttyp sie nicht feststellen kann (etwa auf Grund der äußeren Bedingungen etc.). Für diese nicht näher klassifizierten Objekte bzw. Objekttypen ist ein Standard-Lichtprofil vorgesehen, welches für diese Objekte verwendet wird.

Grundsätzlich funktioniert die erfindungsgemäße Erfindung bereits, wenn nur der Objekttyp oder nur die Entfernung ermittelt werden. Von besonderem Vorteil ist es aber, wenn die zumindest eine Sensorvorrichtung sowohl zur Erkennung des Objekttyps eines detektierten Objektes als auch zur Ermittlung der Entfernung des detektierten Objektes von der Sensorvorrichtung eingerichtet ist, und dass in dem zumindest einen Speicher für jeden Objekttyp ein eigenes Lichtprofil mit Lichtstärke-Werten in Abhängigkeit von der Entfernung des zugehörigen Objektes von der zumindest einen Leuchte der Beleuchtungsvorrichtung abgespeichert sind.

In diesem Fall kann die Leuchtstärke der jeweiligen Leuchte(n) einer Beleuchtungsvorrichtung in Abhängigkeit von dem Objekttyp und der Entfernung des Objektes zu der oder den Leuchten der Beleuchtungsvorrichtung eingestellt werden.

Beispielsweise verlangt ein Objekttyp "LKW" eine höhere oder geringere Leuchtstärke der Leuchten als der Objekttyp "Fußgänger". Über die Entfernung kann nun aber auch noch die Leuchtstärke der einen oder mehreren Leuchten einer Beleuchtungsvorrichtung dahingehend eingestellt werden, wie weit das jeweilige Objekt von der jeweiligen Leuchte entfernt ist, sodass das Lichtprofil über die Entfernung noch weiter für jeden Objekttyp individualisiert werden kann. Beispielsweise kann vorgesehen sein, dass - abgesehen von der unterschiedlichen absoluten Leuchtstärke - für einen Fußgeher eine Leuchte in einer bestimmten Entfernung stärker oder schwächer leuchtet als bei einem LKW.

Von ganz besonderem Vorteil ist es, wenn die Sensorvorrichtung zur Detektion der Position eines detektierten Objektes eingerichtet ist, und die zumindest eine Steuervorrichtung entsprechend den von der zumindest einen Sensorvorrichtung stammenden Informationen betreffend die Position des erkannten Objektes die zumindest eine Leuchte mit einem entsprechenden Lichtstärke-Wert ansteuert, d.h. dass neben der Entfernung des Objektes zu der Sensorvorrichtung (und entsprechend zu den Leuchten der Beleuchtungsvorrichtung) auch noch die Richtung, in welcher sich das Objekt befindet, ermittelt wird, sodass entsprechend die Sensorvorrichtung ermitteln kann bzw. "weiß", wo sich das Objekt befindet.

Beispielsweise kann es für eine Person in einem Gang in einem Gebäude subjektiv angenehm sein, wenn der gesamte Gang nach vorne und hinten beleuchtet ist, solange sich die Person in diesem Gang befindet, während es beispielsweise bei Fahrzeugen wichtig ist, dass die Strasse vor dem Fahrzeug gut ausgeleuchtet ist, ist die Beleuchtung in einem hinter dem Fahrzeug liegenden Bereich weniger wichtig als bei einer Person in einem Gang. Entsprechend ist für einen Fußgänger auf dem Gehsteig wichtig, dass er nach vorne oder nach hinten besser sieht, aber selber nicht so stark beleuchtet sein muss.

Erfindungsgemäß ist der Beleuchtungsvorrichtung zumindest eine Kommunikationseinrichtung zur Kommunikation mit anderen Beleuchtungsvorrichtungen gleicher Art zugeordnet. Die Kommunikation kann dabei kabelgebunden oder drahtlos (Funk, Bluetooth, WiFi, Mobilfunk, Infrarot, ...) erfolgen, oder es ist auch eine gemischte Kommunikation drahtlos drahtgebunden möglich.
Durch die Kommunikation der Beleuchtungsvorrichtungen untereinander können diese in erster Linie Informationen bezüglich detektierter Objekte, aber auch z.B. ihre aktuellen Leuchtstärken untereinander austauschen und diese Informationen können von den Beleuchtungsvorrichtungen zur Auswahl der Lichtstärken aus vorgegebenen Lichtprofilen verwendet werden.
Besonders kompakt lässt sich eine erfindungsgemäße Beleuchtungsvorrichtung realisieren, wenn der zumindest eine Speicher und/oder die zumindest eine Sensorvorrichtung und/oder die zumindest eine Kommunikationseinrichtung und/oder die zumindest eine Steuervorrichtung in die Beleuchtungsvorrichtung integriert sind, vorzugsweise natürlich, wenn alle genannten Komponenten in ein Gerät integriert sind.
Bei dieser sehr kompakten Ausgestaltung der erfindungsgemäßen Beleuchtungsvorrichtung LV sind die Leuchten (eine oder mehrere Leuchten) sowie eine, mehrere oder vorzugsweise alle im Rahmen der Erfindung notwendigen Komponenten (Sensorvorrichtung, Speicher, Kommunikationsvorrichtung) in die Beleuchtungsvorrichtung integriert.
Genauso ist aber von der Erfindung die Situation umfasst, dass beispielsweise Speicher und/oder Sensorvorrichtung und/oder die Kommunikationsvorrichtung von der oder den Leuchten physikalisch dahin gehend getrennt sind, dass zwar diese Komponenten in einem eigenen Gehäuse untergebracht sind, die Leuchten aber nicht in diesem Gehäuse angeordnet sind, sondern dass die eine oder die mehreren Leuchten an unterschiedlichen Orten in Abstand zu diesen Komponenten angeordnet sind.
Genauso kann es aber auch von Vorteil sein, wenn in einem Gehäuse alle Komponenten und auch eine oder mehrere Leuchten angeordnet sind, dass von dieser "Einheit" dann aber noch eine oder mehrere der andere externe Leuchten angesteuert werden, die selbst über keine Sensorvorrichtung verfügen.

In seiner allgemeinsten Auslegungsform bezeichnet der Begriff "Beleuchtungseinrichtung" somit alle zusammengehörenden Komponenten (Sensorvorrichtung, Kommunikationsvorrichtung zur Kommunikation mit anderen Beleuchtungsvorrichtungen, Sensorvorrichtung, Steuervorrichtung, Leuchten), diese müssen aber nicht in einem gemeinsamen Gerät integriert sein sondern können im Extremfall alle separat angeordnet sein.

Im Falle von externen Leuchten, die von der Steuervorrichtung angesteuert werden, müssen die Leuchten zur Kommunikation mit der Steuervorrichtung eingerichtet sein. Dies kann drahtgebunden und/oder drahtlos erfolgen, grundsätzlich kann die Kommunikationsvorrichtung zur Kommunikation der Beleuchtungsvorrichtungen untereinander dazu verwendet werden, oder es ist eine eigene Kommunikationsvorrichtung vorhanden, mittels welcher die Steuervorrichtung mit den externen Leuchten kommuniziert.

Die Beleuchtungsvorrichtung kann eine oder mehrere, interne, rein externe oder gemischt interne und externe Leuchten umfassen.

Externen Leuchten, die sich ja in der Regel in einer gewissen Entfernung von der Sensorvorrichtung befinden, sodass diese Leuchte nicht dieselbe Position in Bezug auf ein Objekt einnehmen wie die Sensorvorrichtung, kann unter Verwendung von z.B. einer Extrapolation wieder ein entsprechender Wert aus einem Lichtprofil zugeordnet und übermittelt werden. Diese Art von "Zentralsteuerung" wird aber in der Regel nur für eine limitierte Anzahl von Leuchten in einem bestimmten Umkreis um die Sensorvorrichtung (ca. 15 Meter Entfernung beispielsweise) eingesetzt und ist besonders in jenen Fällen von Vorteil, in welchen die Leuchten in sehr kurzen Distanzen voneinander installiert sind, etwa in einem Tunnel oder Korridor in einem Gebäude.

Grundsätzlich ausreichend für die Erfindung ist es, wenn die Leuchten einer Beleuchtungsvorrichtung ein- und ausschaltbar sind. Von besonderem Vorteil ist es aber, wenn die zumindest eine Leuchte in verschiedenen Leistungsstufen schaltbar oder dimmbar ist oder wenn die Leuchten auf verschiedene diskrete Leuchtstärken eingeregelt werden kann.

Um ein möglichst harmonisches Beleuchtungsbild zu erzielen, ist es außerdem zweckmäßig, wenn die zumindest eine Sensorvorrichtung weiters dazu eingerichtet ist, die Geschwindigkeit des detektierten Objektes und/oder die Bewegungsrichtung des Objektes zu detektieren und wenn die Steuervorrichtung dazu eingerichtet ist, die Ein- und/oder Ausschaltgeschwindigkeit und/oder die Leuchtdauer der zumindest einen Leuchte der Beleuchtungsvorrichtung in Abhängigkeit von der Geschwindigkeit des detektierten Objektes und/oder der Bewegungsrichtung des Objektes und/oder der Position des Objektes einzustellen.

Basierend auf der momentanen Geschwindigkeit eines Objektes, seiner Distanz zu einer Leuchte und gegebenenfalls seiner Position in Bezug auf die Leuchte werden Leuchtdauer und Ein- /Ausschaltzeit von der Steuervorrichtung berechnet.

Insbesondere wird die eingangs genannte Aufgabe mit einem oben erwähnten Beleuchtungssystem gelöst, bei welchem erfindungsgemäß jede Beleuchtungsvorrichtung abhängig vom detektierten Objekttyp und/oder der Entfernung, insbesondere der Position eines Objektes von der zumindest einen Leuchte einer Beleuchtungsvorrichtung mit einer entsprechenden Lichtstärke angesteuert wird.

Von besonderem Vorteil wie oben schon ausgeführt ist es, wenn bei dem erfindungsgemäßen Beleuchtungssystem benachbarte Beleuchtungsvorrichtungen mittels ihrer Kommunikationsmittel zum Austausch von Informationen miteinander kommunizieren, wobei die von einer Beleuchtungsvorrichtung übermittelten Informationen zumindest Sensor-Informationen von ihrer zumindest einen Sensorvorrichtung enthalten, und wobei eine solche von einer oder mehreren benachbarten Beleuchtungsvorrichtungen übermittelten Informationen empfangende Beleuchtungsvorrichtung diese Informationen bei der Auswahl der Lichtstärke für ihre zumindest eine Leuchte berücksichtigt.

Ein besonders einfacher Aufbau des Beleuchtungssystems ergibt sich, wenn in allen Beleuchtungsvorrichtungen des Beleuchtungssystems dieselben Lichtprofile abgespeichert sind. Außerdem stehen auf diese Weise jeder Beleuchtungsvorrichtung alle relevanten Informationen zum autonomen Einstellen der Lichtstärke zur Verfügung.

Der Informationsinhalt der im Echtzeitbetrieb zu anderen Beleuchtungsvorrichtungen/Leuchten übertragen wird, kann dadurch reduziert werden und reduziert sich auch die technischen Anforderungen an die Kommunikationsstrecke. Für ein bewegliches Objekt, welches im System bereits identifiziert wurde, reicht es entsprechend aus, wenn eine Beleuchtungsvorrichtung der nächsten Beleuchtungsvorrichtung Richtung und Geschwindigkeit des Objektes mitteilt und die Mitteilung "nächsten Wert aus der Tabelle" (bzw. welcher Wert aus der Tabelle zu nehmen ist), mitteilt.

Wenn eine Beleuchtungsvorrichtung mehrere Leuchten umfasst, welche unterschiedliche Bereiche (und nicht im Wesentlichen einen Bereich) beleuchten, so rechnet die Beleuchtungsvorrichtung die Information, welche sie von der eigenen Sensorvorrichtung und/oder anderen Beleuchtungsvorrichtungen erhält, natürlich entsprechend auf die Abstände der Leuchten entsprechend um.

Weiters bietet die Tatsache identische Profile in allen Beleuchtungsvorrichtungen zu verwenden den Vorteil, dass etwa bei einem Tausch der Beleuchtungsvorrichtung diese die Lichtprofile von einer anderen, benachbarten Beleuchtungsvorrichtung holen kann. Entsprechend brauchen auch bei einer Änderung von einem oder mehreren Lichtprofilen diese im Grunde nur auf eine Beleuchtungsvorrichtung im System aufgespielt werden und können dann unter den anderen Vorrichtungen im System verteilt oder von diesen abgerufen werden.

Das erfindungsgemäße System wird damit sehr robust. Wenn eine Beleuchtungsvorrichtung versagt oder Profildaten verliert, haben die anderen Beleuchtungsvorrichtungen trotzdem richtige Werte aus ihren eigenen Tabellen vorliegen.

Weiters ist es noch zweckmäßig, wenn die Auswahl der Beleuchtungsvorrichtungen, an welche von einer Beleuchtungsvorrichtung Informationen übermittelt werden, objektspezifisch, d.h. von dem Objekttyp abhängig erfolgt.

Aus dem oben genannten Grund kann es auch von Vorteil sein, wenn alternativ oder zusätzlich die Auswahl der Beleuchtungsvorrichtungen, an welche von einer Beleuchtungsvorrichtung Informationen übermittelt werden, von der Position des Objektes in dem Beleuchtungssystem abhängig ist.

Ist beispielsweise einem Objekt ein Lichtprofil zugeordnet, welches 4 Werte aufweist (z.B. FLAS = 4; zum Begriff "FLAS" siehe die Beschreibung weiter unter), so wird eine Beleuchtungsvorrichtung, welche vier Abstandseinheit (vier Leuchten) von dem Objekt entfernt, selbständig die Information nicht weiter schicken, weil in dem Lichtprofil keine weiteren Werte vorhanden sind und somit für die nächste Beleuchtungsvorrichtung nicht mehr von Relevanz sind. Diese Entscheidung ist objektspezifisch. Bei einem Objekt mit z.B. 6 Werten im Lichtprofil (z.B. FLAS = 6) wird eine Beleuchtungsvorrichtung, welche vier Abstandseinheiten von dem Objekt O5 entfernt ist, die Information weiter schicken. Diese Systemeigenschaft garantiert, dass die Information nur über eine kurze Entfernung propagiert wird, wodurch die übertragenen Daten und das System eine hohe Stabilität zeigen.

Bei einer konkreten Ausgestaltung der Erfindung ist vorgesehen, dass eine Beleuchtungsvorrichtung nur mit zu ihr benachbarten Beleuchtungsvorrichtungen kommuniziert.

Unter "benachbart" werden beispielsweise alle in einem bestimmten Umkreis befindlichen Leuchten bezeichnet, oder tatsächlich nur die unmittelbar benachbarten Leuchten, beispielsweise bei einer linienförmigen Anordnung der Beleuchtungsvorrichtungen nur die unmittelbar vor und unmittelbar nachher angeordnete Beleuchtungsvorrichtung.

Schließlich ist es auch noch günstig, wenn jede Beleuchtungsvorrichtung autonom entscheidet, an welche Beleuchtungsvorrichtungen sie von ihr selbst detektierte Informationen und/oder Informationen, welche sie von einer oder mehreren anderen Beleuchtungseinrichtungen erhalten hat, übermittelt.

"Autonom" bedeutet, dass die betrachtete Beleuchtungsvorrichtung tatsächlich selbst, also völlig eigenständig, die jeweilige Entscheidung trifft. Zur Entscheidungsfindung können zwar und werden in der Regel auch - vorausgesetzt, dass diese vorliegen - Informationen von anderen Beleuchtungsvorrichtungen verwendet. Ob und wie die betrachtete Beleuchtungsvorrichtung diese Informationen verwendet, bleibt aber ihr alleine überlassen.

Das Beleuchtungssystem kann dadurch im Prinzip unendlich erweitert werden, ohne Gefahr zu laufen, dass die Information unendlich propagiert wird. Außerdem kann auf diese Weise ein dezentrales System geschaffen werden.

Eine Systemerweiterung um weitere Beleuchtungsvorrichtungen kann an jedem Beleuchtungsvorrichtungs-Knoten bzw. Kommunikationsknoten durchgeführt werden, 2 getrennte Systeme können so ohne jegliche Umstellungsmaßnahmen miteinander verbunden werden.

Für den Fall, dass eine Beleuchtungsvorrichtung nur an benachbarte Beleuchtungsvorrichtungen sendet, entscheidet die Beleuchtungsvorrichtung somit, ob Information überhaupt übermittelt wird und ob empfangene Informationen weiter übermittelt werden.

Schließlich wird die eingangs genannte Aufgabe noch mit einem bereits erwähnten Verfahren gelöst, bei welchem erfindungsgemäß jede Beleuchtungsvorrichtung abhängig vom detektierten Objekttyp und/oder der Entfernung, insbesondere der Position eines Objektes von der zumindest einen Leuchte der Beleuchtungsvorrichtung mit einer entsprechenden Lichtstärke angesteuert wird.

Bevorzugt kommunizieren benachbarte Beleuchtungsvorrichtungen mittels ihrer Kommunikationsmittel zum Austausch von Informationen miteinander, wobei die von einer Beleuchtungsvorrichtung übermittelten Informationen zumindest Sensor-Informationen von ihrer zumindest einen Sensorvorrichtung enthalten, und wobei eine solche von einer oder mehreren benachbarten Beleuchtungsvorrichtungen übermittelten Informationen empfangende Beleuchtungsvorrichtung diese Informationen bei der Auswahl der Lichtstärke für ihre zumindest eine Leuchte berücksichtigt.

Außerdem kann vorgesehen sein, dass in allen Beleuchtungsvorrichtungen des Beleuchtungssystems dieselben Lichtprofile abgespeichert sind.

Weiters ist es von Vorteil, wenn eine Beleuchtungsvorrichtung jene Beleuchtungsvorrichtungen, an welche sie Informationen übermittelt, objektspezifisch, d.h. von dem Objekttyp abhängig auswählt, und/oder wenn eine Beleuchtungsvorrichtung jene Beleuchtungsvorrichtungen, an welche sie Informationen übermittelt, in Abhängigkeit von der Position des Objektes und auch der Bewegungsrichtung in dem Beleuchtungssystem auswählt.

Bei einer konkreten Ausgestaltung des erfindungsgemäßen Verfahrens ist weiters vorgesehen, dass eine Beleuchtungsvorrichtung nur mit zu ihr benachbarten Beleuchtungsvorrichtungen kommuniziert.

Außerdem kann vorgesehen sein, dass jede Beleuchtungsvorrichtung autonom entscheidet, an welche Beleuchtungsvorrichtungen sie selbst detektierte Informationen und/oder Informationen, welche sie von einer oder mehreren anderen Beleuchtungseinrichtungen erhalten hat, übermittelt.

Jedes Beleuchtungsvorrichtung für sich genommen ist jeweils eine zentrale Steuereinheit, die sich mit anderen Beleuchtungsvorrichtungen vor einem Entscheidungsvorgang synchronisiert/abgleicht. Bei einem Ausfall von einer oder mehrerer Beleuchtungsvorrichtungen wird die Funktion der anderen Beleuchtungsvorrichtungen nicht oder nur wenig beeinflusst, da jede Beleuchtungsvorrichtung alle Lichtprofile und eine eigene Steuerlogik enthält.

Jede Beleuchtungsvorrichtung kann mehrere Objekte, die sie detektiert sowie Informationen über mehrere Objekte und deren Eigenschaften wie Objekt-Typ, Bewegungsrichtung, Geschwindigkeit, Größe, eigene Beleuchtung, etc. die sie von einer oder mehrerer Beleuchtungsvorrichtungen empfängt, durch die vordefinierten Relationen evaluieren, die entsprechende Lichtstärke und Einlaufzeit wählen und entsprechend dem Ergebnis jeweils eine einzige Meldung an benachbarte Beleuchtungsvorrichtungen senden.

Es ist nicht notwendig, dass die Sensoren der einzelnen Beleuchtungsvorrichtungen zuerst die Signale an eine zentrale Steuereinheit senden, welche Steuereinheit dann auch die jeweilige Positionen der Sensoren genauso wie die der Leuchten kennen muss, um dann an die bestimmten Leuchten die Steuersignale mit gewünschter Lichtstärke übermitteln zu können. In diesem Fall wäre nämlich bei mehreren Objekten durch die durch Netzwerk und System bedingte Latenz eine Steuerung in Echtzeit nicht mehr möglich. Die natürliche Grenze für Systeme mit einer Zentralsteuereinheit wird hier von der Datenübertragungsbandbreite, Anzahl des Objekten und Anzahl der unabhängig gesteuerten Leuchten gegeben.

Anders als im Stand der Technik wird die detektierte Information auch nicht unbeschränkt durch das Netzwerk der Beleuchtungsvorrichtungen propagiert und die Information wird nicht nur in Bewegungsrichtung propagiert, sondern bevorzugt in alle Richtungen (z.B. zu allen benachbarten Beleuchtungsvorrichtungen). Außerdem ist bei der vorliegenden Erfindung die Reichweite der Information, also wie weit die Information von einer Beleuchtungsvorrichtung gesendet wird, einstellbar.

Die Verbreitung einer Meldung zu benachbarten Beleuchtungsvorrichtungen oder die maximale Anzahl der Beleuchtungsvorrichtungen (Reichweite), über welche diese Meldung propagiert wird, ist in den Lichtprofilen reglementiert.

Die oben erwähnten vordefinierten und programmierbaren Relationen definieren das Verhalten des Beleuchtungssystems und der einzelnen Beleuchtungsvorrichtung bei Interaktion von zwei oder mehr Objekten. Damit wird ein gemeinsames Lichtprofil definiert, welches der gegebenen Situation optimal entspricht.

### Beispiel: 3 Situationen a), b), c)

a) ein Fahrzeug nähert sich einem Fußgänger, der am Gehsteig in die Gegenrichtung geht
b) ein Fahrzeug nähert sich einem Fußgänger, der am Gehsteig in dieselbe Richtung wie das Fahrzeug geht
c) ein Fahrzeug nähert sich einem Fußgänger, der die Straße gerade überquert

Obwohl die einzelnen Lichtprofile für die beiden Objekte identisch sind, wird in jeder der drei Situationen ein unterschiedliches Lichtprofil erzeugt, welches der Gesamtsituation optimal entspricht.

Dadurch, dass wie oben beschrieben zu einem bestimmten Zeitpunkt immer nur eine einzige Meldung von einer Beleuchtungsvorrichtung, welche Meldung Informationen enthält, die sich aus einer Reihe von detektierten Informationen oder aus dem Ergebnis der Relationen die sich aus von anderen Beleuchtungsvorrichtungen erhaltenen Informationen und aus Informationen von eigenen Sensoren ergeben, abgesendet wird, gibt es auch kein Limit für die Anzahl der maximal detektierbaren Objekte.

Durch die Relationsberechnung werden die Informationen de facto in einem Ergebnis komprimiert, wodurch man nicht nur die Anzahl der Objekte sondern auch die Bandbreite, die für eine Datenübertragung notwendig ist, immer unter Kontrolle hat.

Im Folgenden ist die Erfindung an Hand der Zeichnung näher erläutert. In dieser zeigt
Fig. 1 eine Variante einer erfindungsgemäßen Beleuchtungsvorrichtung,
Fig. 1a eine weitere Variante einer erfindungsgemäßen Beleuchtungsvorrichtung,
Fig. 1b eine noch weitere Variante einer erfindungsgemäßen Beleuchtungsvorrichtung,
Fig. 2 eine beispielhafte schematische Darstellung von Lichtprofilen,
Fig. 3a ein Lichtprofil bzw. eine Aura für ein erstes Objekt, und
Fig. 3b ein Lichtprofil bzw. eine Aura für ein zweites Objekt,
Fig. 3c ein Lichtprofil bzw. eine Aura für eine drittes Objekt,
Fig. 4 eine eindimensionale Anordnung von Leuchten in einem Beleuchtungssystem,
Fig. 5 eine zweidimensionale Anordnung von Leuchten in einem Beleuchtungssystem,
Fig. 6 die Lichtverteilungen in einem Beleuchtungssystem zu drei unterschiedlichen Zeitpunkten bei einem sich bewegenden Objekt,
Fig. 7 die Lichtverteilungen in einem Beleuchtungssystem für den Fall von zwei sich in eine Richtung bewegenden Objekten,
Fig. 8 die Lichtverteilungen in einem Beleuchtungssystem für den Fall von zwei sich in entgegen gesetzter Richtung bewegenden Objekten,
Fig. 9 eine schematische beispielhafte Kommunikation zwischen Beleuchtungsvorrichtungen in einem Beleuchtungssystem nach der Erfindung,
Fig. 10 ein weiteres Beispiel für die Kommunikation von Beleuchtungsvorrichtungen in einem erfindungsgemäßen Beleuchtungssystem, und
Fig. 11 ein Beispiel für die Lichtverteilung eines Fahrzeuges vor und in einem Tunnel.

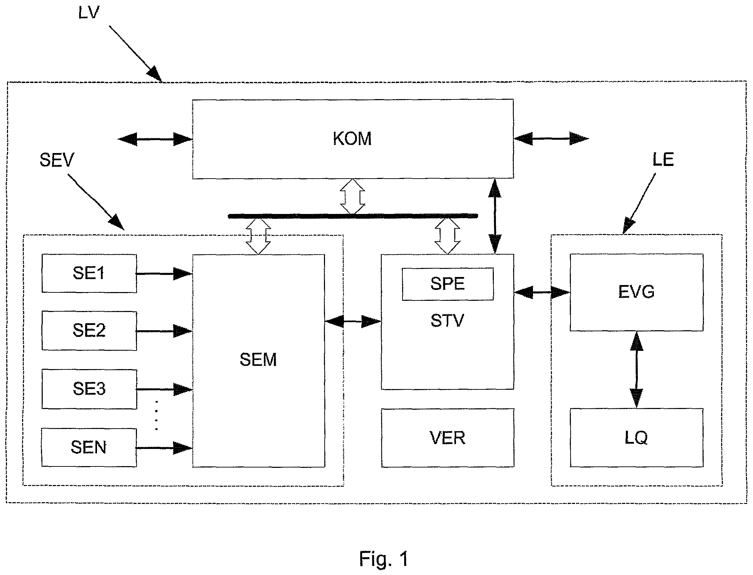

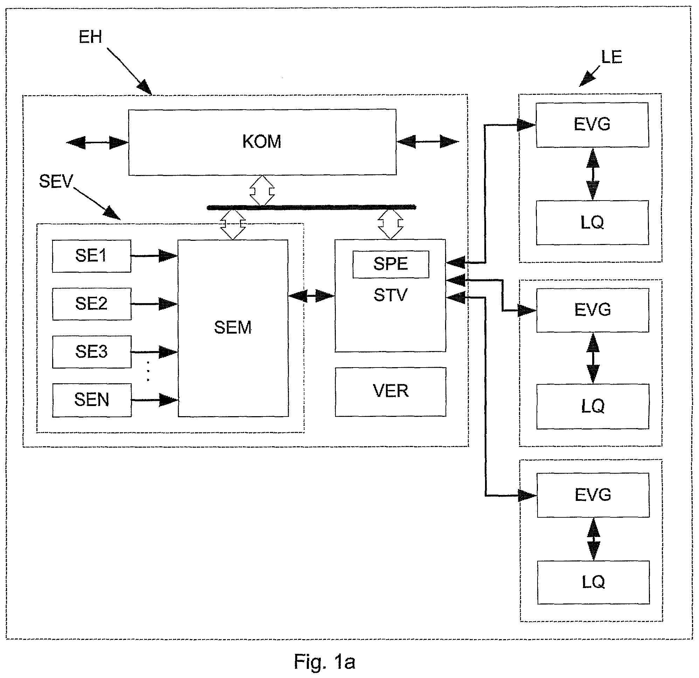

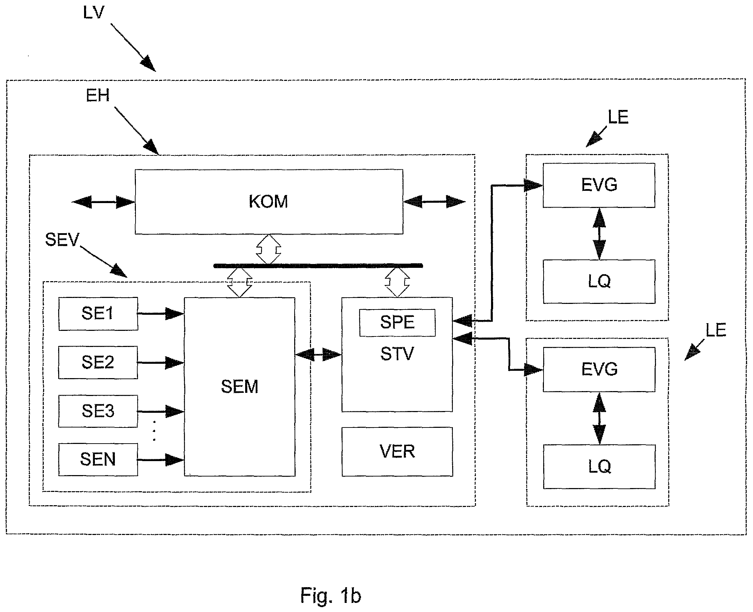

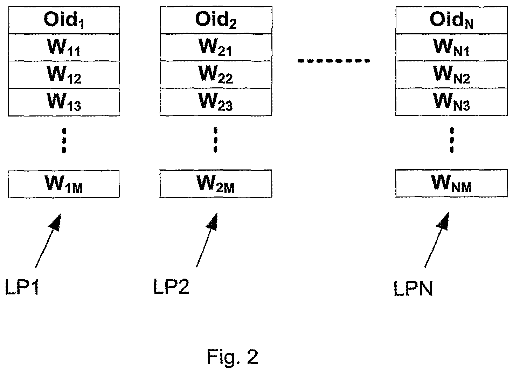

Figur 1 zeigt eine erste Variante einer erfindungsgemäßen Beleuchtungsvorrichtung LV, der folgende Text nimmt außerdem schon Bezug auf Figur 2. Die Energieversorgungseinheit der Beleuchtungsvorrichtung LV ist mit dem Bezugszeichen VER bezeichnet.

Die Beleuchtungsvorrichtung LV umfasst in dieser Darstellung eine Leuchte LE, welche im Wesentlichen aus der Lichtquelle LQ und einem elektronischen Vorschaltgerät EVG besteht. Natürlich kann die Beleuchtungsvorrichtung LV auch mehrere Leuchten umfassen.

Die Beleuchtungsvorrichtung LV weist weiters eine Sensorvorrichtung SEV zur Detektion von Objekten O1, O2, O3 (siehe weitere Figuren) auf, welche Sensorvorrichtung SEV der Beleuchtungsvorrichtung LV Informationen zum Steuern der zumindest einen Leuchte LE liefert.

Die Sensorvorrichtung beinhalten ein Sensormodul SEM mit einer Signalbearbeitungseinheit, an welche ein oder in der Regel mehrere unterschiedliche Sensoren SE1, SE2, SE3, ..., SEN angeschlossen sind. Die Signalverarbeitungseinheit bearbeitet die von den Sensoren stammenden Primärsignale, sodass die Sensorvorrichtung SEV selbst dann nur noch einfache Informationen, wie: "detektiert wurde ein Objekttyp O2, die Position von O2 ist XX, die Geschwindigkeit von O2 beträgt YY, die Fahrbahn ist nass, die Lichtstärke auf der Straße beträgt, usw."

Bei den Sensoren SE1 - SEN kann es sich um Sensoren zur Objekterkennung und Objektverfolgung, Audiosensoren, Infrarot- und/oder Radarsensoren zur Detektion der Bewegungsrichtung des Objektes, etc. handeln. Es können weiters auch Sensoren zur Detektion der "Grundhelligkeit" vorhanden sein, beispielsweise muss eine Leuchte weniger stark leuchten, wenn die Grundhelligkeit (etwa bei starkem Mondlicht etc.) höher ist als in anderen Fällen. Es kann so auch u.U. auch detektiert werden, ob etwa eine benachbarte Leuchte ausgefallen ist und entsprechend die Lichtstärke adaptiert werden etc.

Die Sensorvorrichtung SEV ist zur Erkennung des Objekttyps Oidl, Oid2, ..., OidN eines detektierten Objektes O1, O2, O3 und/oder zur Ermittlung der Entfernung des detektierten Objektes O1, O2, O3 eingerichtet ist, vorzugsweise ist die Sensorvorrichtung dazu eingerichtet, Objekttyp und Entfernung zu ermitteln. Außerdem ist es von Vorteil, wenn nicht nur die Entfernung, sondern generell die Position, Bewegungsrichtung und Geschwindigkeit des Objektes ermittelt wird.

In der Regel, wie weiter unten noch näher erörtert, ist es von Bedeutung, "wie viele" Leuchten (Abstandseinheit = Abstand der Leuchten, für den Fall von annähernd gleichen Abständen zwischen den Leuchten) ein Objekt von einer bestimmten Leuchte entfernt ist, sodass sich die Entfernungsmessung in erster Linie auf diese Frage konzentriert, und die Positionsmessung sich auf die Frage, wie viele Leuchten vor, hinter, seitlich, über, unter einer bestimmten Leuchte ein Objekt sich befindet, konzentriert.

Weiters weist die Beleuchtungsvorrichtung LV einen Speicher SPE auf, der in dieser Ausgestaltung als Teil einer Steuervorrichtung STV ausgebildet ist.

Der Speicher SPE ist zur Abspeicherung von in diesem Beispiel N Lichtprofilen LP1, LP2, ..., LPN (Figur 2) eingerichtet, wobei die Lichtprofile LP1, LP2, ..., LPN Lichtstärken-Werte W11, ..., W1M; W21, ..., W2M; ...; WN1, ..., WNM in Abhängigkeit von Objekttypen Oidl, Oid2, ..., OidN und Entfernung, vorzugsweise Position eines Objektes O1, O2, O3 zu der einen Leuchte LE der Beleuchtungsvorrichtung LV enthalten.

Die Steuervorrichtung STV steuert nun mittels den von der Sensorvorrichtung SEV stammenden Informationen betreffend den Objekttyp Oidl, Oid2, ..., OidN und die Entfernung (Position) eines erkannten Objektes die Leuchte LE mit einem entsprechenden Lichtstärke-Wert W11, ..., W1M; W21, ..., W2M; ...; WN1, ..., WNM aus einem dem Objekttyp entsprechenden Lichtprofil an.

Bei der gezeigten bevorzugten Variante verfügt die Beleuchtungsvorrichtung LV bereits über eine Kommunikationseinrichtung KOM zur Kommunikation mit anderen Beleuchtungsvorrichtungen gleicher Art. Die Kommunikation kann dabei kabelgebunden oder drahtlos (Funk, Bluetooth, WiFi, Mobilfunk, Infrarot, ...) erfolgen, oder es ist auch eine gemischte Kommunikation drahtlos drahtgebunden möglich.

Durch die Kommunikation der Beleuchtungsvorrichtungen untereinander können diese in erster Linie Informationen bezüglich detektierter Objekte, aber auch z.B. ihre aktuellen Leuchtstärken untereinander austauschen und diese Informationen können von den Beleuchtungsvorrichtungen zur Auswahl der Lichtstärken aus gegebenen Lichtprofilen verwendet werden.

Die in Figur 1 gezeigte erfindungsgemäße Beleuchtungsvorrichtung lässt sich besonders kompakt realisieren, da alle relevanten Komponenten für die Beleuchtungsvorrichtung, wie Speicher SPE, Sensorvorrichtung SEV, Kommunikationseinrichtung KOM, Steuervorrichtung STV in und auch die Leuchte(n) in ein Gerät LV integriert sind.

Es können aber auch bestimmte Komponenten extern vorgesehen sein, oder es sind alle Komponenten bis auf die Leuchten in einer gemeinsamen Einheit EH integriert, welche mit einer Anzahl von externen Leuchten LE, beispielsweise drei Leuchten LE wie in Figur 1a dargestellt, verbunden sind. Die Beleuchtungsvorrichtung LV besteht in diesem Beispiel aus der Einheit EH und den drei damit verbundenen Leuchten LE.

Genauso kann es aber auch von Vorteil sein, wenn wie in Figur 1b dargestellt in einem Gehäuse EH alle Komponenten und auch eine oder mehrere Leuchten angeordnet sind (entsprechend Figur 1), dass von dieser Einheit EH dann aber noch eine oder mehrere externe Leuchten angesteuert werden, die selbst über keine Sensorvorrichtung, Kommunikationsvorrichtung und Steuervorrichtung verfügen. Die Beleuchtungsvorrichtung umfasst wieder die Einheit EH und die externen Leuchten LE.

In seiner allgemeinsten Auslegungsform bezeichnet der Begriff "Beleuchtungseinrichtung" somit alle zusammengehörenden Komponenten (Sensorvorrichtung, Kommunikationsvorrichtung zur Kommunikation mit anderen Beleuchtungsvorrichtungen, Sensorvorrichtung, Steuervorrichtung, Leuchten), diese müssen aber nicht in einem gemeinsamen Gerät integriert sein sondern können im Extremfall alle separat angeordnet sein.

Im Falle von externen Leuchten, die von der Steuervorrichtung angesteuert werden, müssen die Leuchten zur Kommunikation mit der Steuervorrichtung eingerichtet sein. Dies kann drahtgebunden und/oder drahtlos erfolgen, grundsätzlich kann die Kommunikationsvorrichtung zur Kommunikation der Beleuchtungsvorrichtungen untereinander dazu verwendet werden, oder es ist eine eigene Kommunikationsvorrichtung vorhanden, mittels welcher die Steuervorrichtung mit den externen Leuchten kommuniziert.

Die Beleuchtungsvorrichtung kann eine oder mehrere, interne, rein externe oder gemischt interne und externe Leuchten umfassen.

Externen Leuchten, die sich ja in der Regel in einer gewissen Entfernung von der Sensorvorrichtung befinden, sodass diese Leuchte nicht dieselbe Position in Bezug auf ein Objekt einnehmen wie die Sensorvorrichtung, kann unter Verwendung von z.B. einer Extrapolation wieder ein entsprechender Wert aus einem. Lichtprofil zugeordnet und übermittelt werden. Diese Art von "Zentralsteuerung" wird aber in der Regel nur für eine limitierte Anzahl von Leuchten in einem bestimmten Umkreis um die Sensorvorrichtung (ca. 15 Meter Entfernung beispielsweise) eingesetzt und ist besonders in jenen Fällen von Vorteil, in welchen die Leuchten in sehr kurzen Distanzen voneinander installiert sind, etwa in einem Tunnel oder Korridor in einem Gebäude.

Figur 2 zeigt nun wie oben schon kurz angesprochen Lichtprofile LP1, LP2, ..., LPN für N verschiedene Objekttypen Oidl, Oid2, ..., OidN. Jedes Lichtprofil enthält ein für den jeweiligen Objekttypen eine Auflistung von Lichtstärke-Werten W11, W12, ..., W1M (für den Objekttyp Oid1), ..., WN1, ..., WNM (für den Objekttyp OidN). "M" bezeichnet die Anzahl von Beleuchtungsvorrichtungen oder Leuchten, die für einen bestimmten Objekttyp leuchten und seine Aura bilden, für unterschiedliche Objekttypen kann diese Anzahl sich unterscheiden, was in Figur 2 aber nicht dargestellt ist.

Die Werte W11, ... stellen entweder die tatsächlich von der Leuchte abzugebende Lichtstärke dar oder vorzugsweise jene Lichtstärke oder Beleuchtungsstärke, mit welcher die Umgebung der Leuchte zu beleuchten ist. In letzterem Fall kann in Abhängigkeit von den äußeren Gegebenheiten die von der Leuchte abgegebene Leuchtstärke angepasst werden, um den Wert für die Umgebung zu erreichen.

Die Werte W11, .... in den Lichtprofilen definieren nun für jeden Objekttyp ein Lichtbild ("Aura"), welches sich bei einer Bewegung des Objektes mit diesem mitbewegt. Die Lichtprofile enthalten dabei üblicherweise, wie dargestellt, keine Entfernungswerte, da die Entfernung mit dem Leuchtenabstand quantisiert ist, d.h. jeder Tabellenwert bezieht sich auf eine Leuchte, welche einen bestimmten (Leuchten-)Abstand zu dem Objekt aufweist.

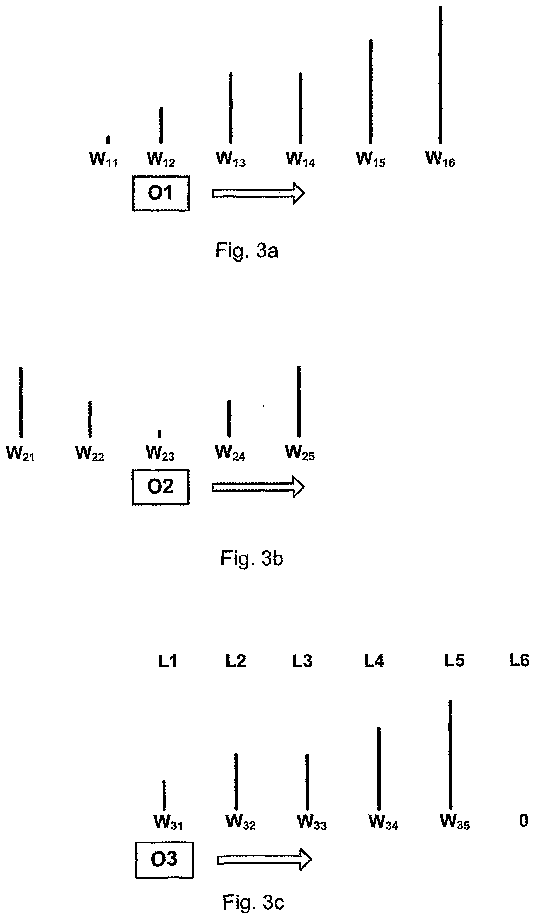

Zur Veranschaulichung sei auf die Figuren 3a und 3b verwiesen. Figur 3a zeigt ein Objekt O1 (=Oid1), für welches eine Aura mit 6 Leuchten definiert ist. Diese Leuchten sind beispielsweise 20 Meter voneinander entfernt, d.h. 6 Leuchten auf 100 Meter. Die Aura eines Objektes erstreckt sich einerseits auf den vor dem Objekt liegenden Bereich (FLAS, "Forward Light Aura Shape") und andererseits auf den hinter dem Objekt liegenden Bereich (BLAS, "Backward Light Aura Shape").

In dem Beispiel in Figur 3a ist nun vorgesehen, dass die FLAS 5 Leuchten umfasst und die BLAS eine Leuchte umfasst, d.h. dass vor dem Objekt O1 5 Leuchten und hinter dem Objekt eine Leuchte leuchtet. Entsprechend umfasst das Lichtprofil 6 Leuchtstärkewerte W11- W16, wobei der Werte W12 (der zweite Wert in der Tabelle) den Leuchtstärkewert unter der Leuchte (und den ersten Wert der FLAS) beschreibt, W13 beschreibt den Leuchtstärkewerte der Leuchte in "einem" Leuchtenabstand zu der Leuchte, unter welcher das Objekt sich befindet, etc. Der Wert W11 beschreibt die Leuchtstärke für die eine Leuchte hinter dem Objekt.

Bewegt sich das Objekt nun entlang einer Reihe von Leuchten, so wandert diese Aura mit dem Objekt mit, d.h. die Leuchte unter welcher sich das Objekt gerade befindet (Wert W12) wird bei Fortbewegung mit dem Wert W11 belegt usw.

Figur 3b zeigt ein Beispiel für ein Objekt O2, welches eine Aura von 5 Leuchten umfasst, wobei die FLAS 3 Leuchten und die BLAS 2 Leuchten umfasst.

Falls vorgesehen ist, dass ein Objekt keine BLAS aufweist, d.h. dass hinter dem Objekt keine Leuchte leuchtet, dann beschreibt der Wert W11 die Leuchtstärke für jene Leuchte, unter welcher sich das Objekt gerade befindet (Figur 3c).

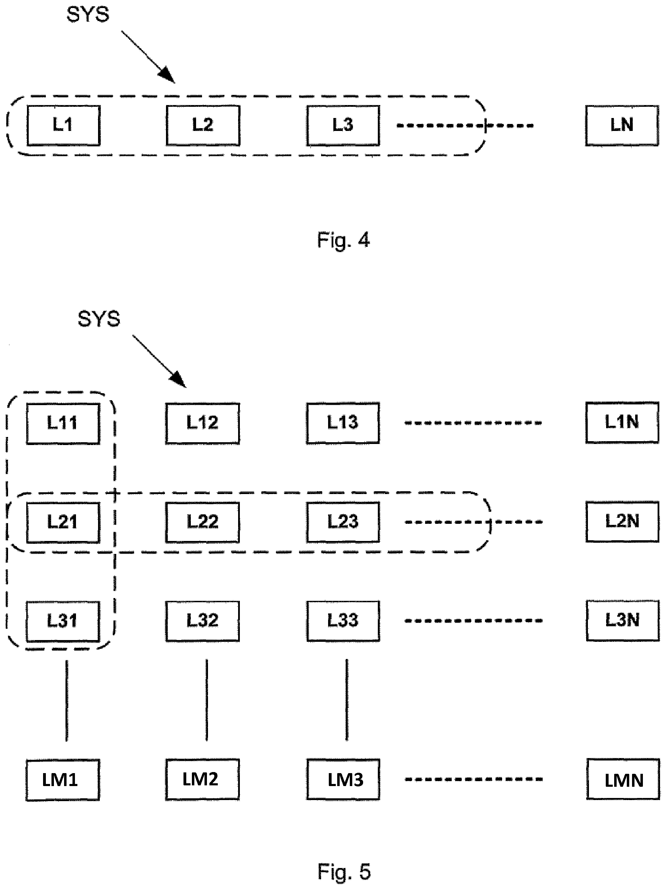

Ein erfindungsgemäßes Beleuchtungssystem SYS in einer "eindimensionalen" Konfiguration ist in Figur 4 dargestellt. Diese Beleuchtungssystem SYS besteht aus den Beleuchtungsvorrichtungen (oder Leuchten) L1 ... LN, die entlang einer Strecke (Gerade, Kurve, abgewinkelter Gang, etc.) angeordnet sind.

Ein weiteres erfindungsgemäßes Beleuchtungssystem SYS in einer "zweidimensionalen" Konfiguration ist in Figur 5 dargestellt, hier sind die Leuchten (oder Beleuchtungsvorrichtungen) L11, ...., LM1, .....L1N, ...., LMN über eine Fläche verteilt. Bei einer solchen zweidimensionalen Konfiguration umfasst die Aura eines Objektes auch eine linksseitige Aura ("Left LAS") und eine rechtsseitige Aura ("Right LAS"), deren entsprechende LeuchtstärkeWerte wieder in einer eindimensionalen Tabelle (Lichtprofil) abgebildet sein kann.

Es kann das Lichtprofil aber auch in einer 2D-Tabelle (Matrix) definiert sein, in welcher für jeden Objekttyp festgelegt wird, was die zentrale (i ,j) Position für einen bestimmten Objekt-typ ist, d.h. das ist jener Wert der Leuchtstärke, der sich auf die Position (Leuchte) bezieht, unter welcher sich das Objekt befindet. Unterschiedliche Objekttypen können unterschiedliche zentrale Positionen aufweisen. Die Aura, also Lichtstärke und Anzahl der leuchtenden Leuchten in allen Richtungen eines Objekttyps ist dann durch diese Matrix definiert. Eine solche Darstellung des Lichtprofils eignet sich besonders für Parkplätze oder Großraumflächen mit Leuchten in einer Gitterkonstruktion.

Grundsätzlich lässt sich anmerken, dass die Erfindung prinzipiell auf beliebige Anordnungen von Leuchten/Beleuchtungsvorrichtungen anwendbar ist, dass sich aber eine besonders einfache Implementierung ergibt, wenn die Leuchten in einer 1D, 2D oder 3D Anordnung äquidistant zueinander angeordnet sind.

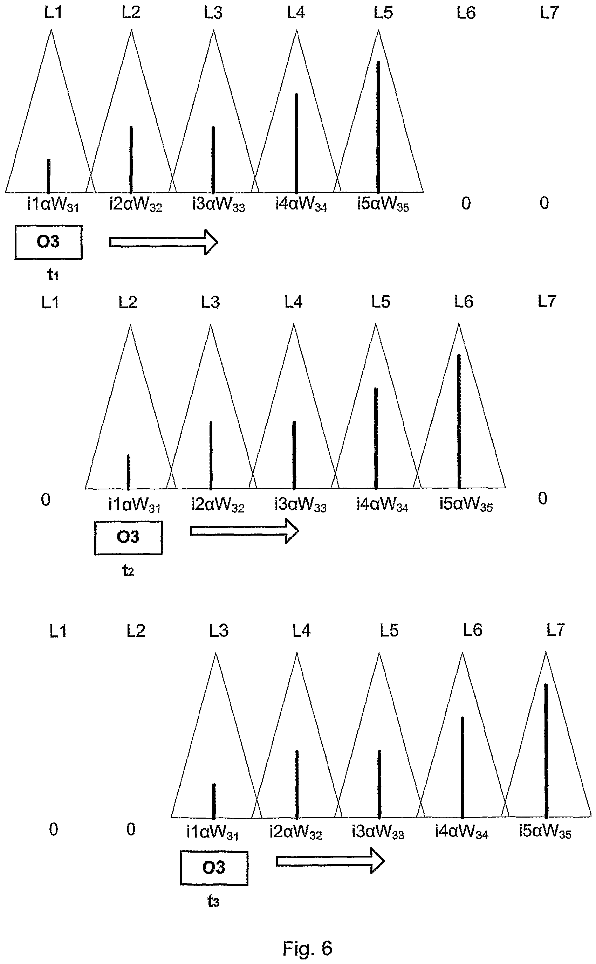

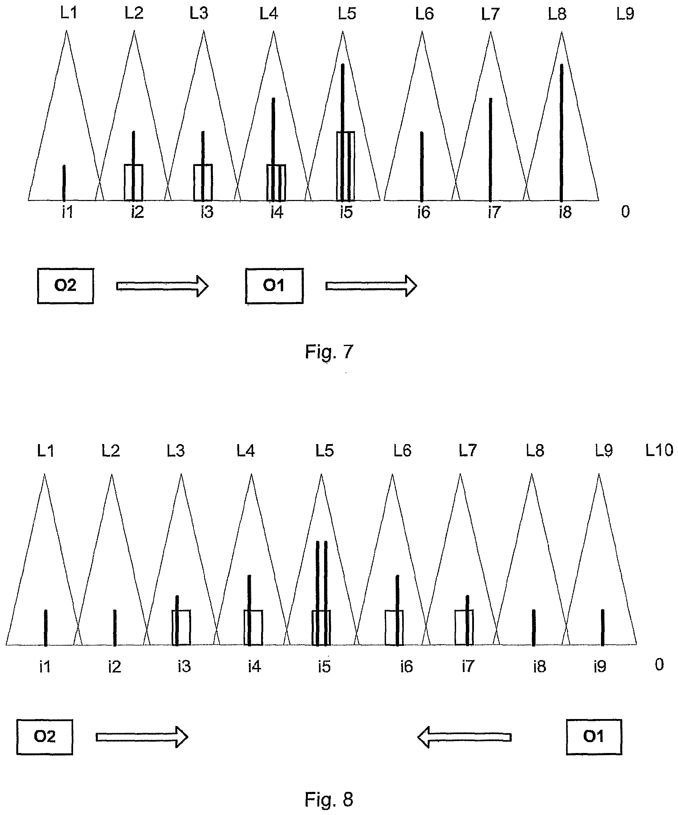

Figur 6 zeigt noch die Fortbewegung eines Objektes O3 (siehe Aura aus Figur 3c) entlang einer geradlinigen Anordnung von Leuchten L1 - L7, welche jeweils eine Lichtintensität von i1 - i7 abstrahlen. Der Einfachheit halber wird in Figur 6 und insbesondere in Figur 7 und 8 davon ausgegangen, dass es sich beiden Leuchten L1, ... um Beleuchtungsvorrichtungen mit allen relevanten Komponenten inklusive einer Leuchte, angeordnet an einem gemeinsamen Ort (z.B. in einem Gehäuse) handelt, und es wird bei diesen Figuren synonym von Leuchten oder Beleuchtungsvorrichtungen gesprochen. Diese dient in erster Linie der einfacheren Darstellung des Erfindungsgedankens und soll keine Einschränkung der Erfindung darstellen.

Entsprechend der Aura aus Figur 3c entsprechen die Lichtintensitäten zum Zeitpunkt t1 (Objekt O3 befindet sich unter Leuchte/Beleuchtungsvorrichtung L1) folgendem Zusammenhang: i1 ∝ W11, i2 oc W12, i3 ∝ W13, i4 oc W14, i5 oc W15, i6 = 0, i7 = 0.

Bewegt sich das Objekt O3 und befindet sich zum Zeitpunkt t2 unter der Leuchte L2, so gelten folgende Zusammenhänge: i1 = 0, i2 ∝ W11, i3 oc W12, i4 ∝ W13, i5 oc W14, i6 oc W15, i7 = 0. Zum Zeitpunkt t3 gilt schließlich: i1 = 0, i2 = 0, i3 oc W11, i4 oc W12, i5 oc W13, i6 oc W14, i7 oc W15.

Figur 7 zeigt eine weitere Situation (dargestellt sind 9 Leuchten/Beleuchtungsvorrichtungen), in welcher zwei Objekte O1, O2 sich von links nach rechts entlang des Beleuchtungssystems bewegen. In diesem Beispiel wird davon ausgegangen, dass beide Objekte O1, O2 eine Aura aufweisen wie sie in Figur 3c dargestellt ist.

Prinzipiell würden die Leuchten L1 - L5 entsprechend dem Lichtprofil (der Aura) des Objektes O2 angesteuert werden und die Leuchten L4 - L8 entsprechend dem (in diesem Beispiel identischen) Lichtprofil des Objektes O1. Da die Leuchten nun miteinander kommunizieren, wissen die betroffenen Leuchten von der Präsenz der Objekte O1, O2, und um eine Blendung des Objektes O1 von dem dahinter fahrenden, sich möglicherweise nähernden Objekt O2 zu verhindern, erfolgt eine Absenkung der Leuchtstärke der hinter Objekt O1 befindlichen Lampen nach definierten Regeln. Bei dem gezeigten Beispiel werden die Leuchten L2 - L4 auf den zentralen Wert des Objektes O2, d.h. hier auf den Wert unter der Leuchte L1 gesetzt. Leuchte L5 wird eigentlich mit 2 Werten, einem hohen Wert von O2 und einem niedrigeren von O1 angesteuert, in diesem konkreten Fall wird der geringere Wert von Objekt O1 verwendet.

Figur 8 zeigt eine ähnliche Situation bei sich aufeinander zu bewegenden Objekten. Das Beleuchtungssystem soll nicht blenden oder durch eine Lichtstärkeänderung irritieren. In der Praxis schalten die Autofahrer bei solchen Situationen auch von einen Fernlicht auf einen Abblendlicht, ähnlich soll hier die Adaption der Lichtverteilung in dem System erfolgen.

Um ein möglichst harmonisches Beleuchtungsbild zu erzielen, ist es außerdem zweckmäßig, wenn die Sensorvorrichtung SEV einer Beleuchtungsvorrichtung LV weiters dazu eingerichtet ist, die Geschwindigkeit der detektierten Objekte O1, O2, O3 und/oder die Bewegungsrichtung des Objektes O1, O2, O3 zu detektieren.

Außerdem ist die Steuervorrichtung STV dazu eingerichtet, die Ein- und/ oder Ausschaltgeschwindigkeit und/oder die Leuchtdauer der zumindest einen Leuchte LE der Beleuchtungsvorrichtung LV in Abhängigkeit von der Geschwindigkeit des detektierten Objektes O1, O2, O3 und/oder der Bewegungsrichtung des Objektes O1, O2, O3 und/oder der Position des Objektes O1, O2, O3 einzustellen.

Basierend auf der momentanen Geschwindigkeit eines Objektes, seiner Distanz zu einer Leuchte und gegebenenfalls seiner Position in Bezug auf die Leuchte werden Leuchtdauer und Ein- / Ausschaltzeit von der Steuervorrichtung berechnet.

Von besonderem Vorteil ist es ja wie oben schon ausgeführt, wenn bei dem erfindungsgemäßen Beleuchtungssystem SYS benachbarte Beleuchtungsvorrichtungen mittels ihrer Kommunikationsmittel KOM zum Austausch von Informationen miteinander kommunizieren, wobei die von einer Beleuchtungsvorrichtung übermittelten Informationen zumindest Sensor-Informationen von ihrer zumindest einen Sensorvorrichtung SEV enthalten, und wobei eine solche von einer oder mehreren benachbarten Beleuchtungsvorrichtungen übermittelten Informationen empfangende Beleuchtungsvorrichtung diese Informationen bei der Auswahl der Lichtstärke für ihre zumindest eine Leuchte berücksichtigt.

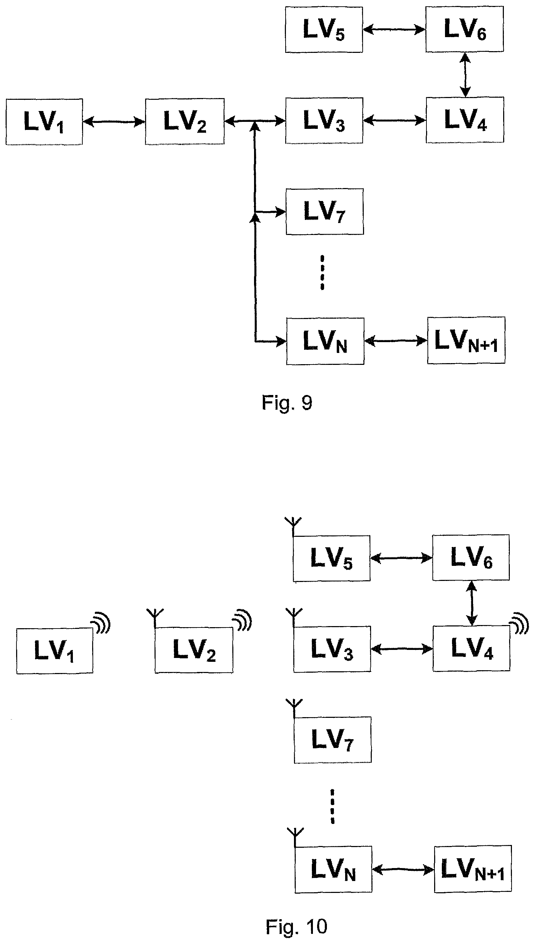

Figur 9 zeigt ein Beispiel für eine Kommunikation in einem Beleuchtungssystem bestehend aus den Beleuchtungsvorrichtungen LV1, LV2, ..., LV7, LVN, LVN+1. Die Kommunikation erfolgt bidirektional und in Form einer 1 zu 1 Kommunikation zwischen der Beleuchtungsvorrichtung LV1 und LV2 und in einer 1 zu N Kommunikation zwischen der Beleuchtungsvorrichtung LV2 und den restlichen Beleuchtungsvorrichtungen LV3 - LVN+1. Die Beleuchtungsvorrichtungen LV3 - LV7 kommunizieren wiederum nur mit ihren unmittelbaren Nachbarn, wobei aber die Kommunikation derart erfolgt, dass bei Ausfall einer Beleuchtungsvorrichtung die Kommunikation durchgeschleift wird.

Figur 9 zeigt nur einen Ausschnitt der gesamten Anordnung. Nach der Beleuchtungsvorrichtung LV7 kann LV8 kommen usw. Jede Beleuchtungsvorrichtung verfügt über zwei Kommunikationsanschlüsse. Damit kann jede Beleuchtungsvorrichtung in beide Richtungen senden oder empfangen. Falls sich ein Objekt in Figur 9 aus Richtung der Beleuchtungsvorrichtung V1, LV2 bewegt, wird die Beleuchtungsvorrichtung LV2 zu LV3, LV7, LVN Information übertragen. Falls LV7 die letzte Beleuchtungsvorrichtung ist, wird die Information nicht weiter übertragen, weil keine weitere Beleuchtungsvorrichtung vorhanden ist.

Falls ein Objekt in Figur 9 aus Richtung der Beleuchtungsvorrichtung LV7, überträgt die Beleuchtungsvorrichtung LV7 an LV2, LV3 und LVN die Information.

Die Kommunikation in Figur 9 erfolgt drahtgebunden, in Figur 10 ist noch eine gemischte Kommunikation drahtlos/drahtgebunden dargestellt.

An dieser Stelle sei noch einmal darauf hingewiesen, dass in den Figuren 8 und 9 Beleuchtungsvorrichtungen gezeigt sind, wobei eine solche Vorrichtung jeweils eine oder mehrere, interne und/oder externe Leuchten umfassen kann.

In den vorangegangenen Figuren hingegen waren explizit Leuchten dargestellt, wobei eine oder mehrere Leuchten Teil einer Beleuchtungsvorrichtung sein können.

Ein besonders einfacher Aufbau des Beleuchtungssystems ergibt sich, wenn in allen Beleuchtungsvorrichtungen des Beleuchtungssystems SYS dieselben Lichtprofile abgespeichert sind. Jeder Beleuchtungsvorrichtung stehen auf diese Weise alle relevanten Informationen zum autonomen Einstellen der Lichtstärke zur Verfügung. Die Beleuchtungsvorrichtungen können miteinander getauscht werden, ohne dass die Funktionalität des Systems gestört wird, d.h. es kann auch völlig problemlos eine Vorrichtung getauscht werden durch eine gleichartige Vorrichtung, etwa zu Wartungszwecken etc.

Grundsätzlich haben die von den eigenen Sensoren einer betrachteten Beleuchtungsvorrichtung ermittelten Informationen eine höhere Priorität als Informationen, die von anderen Beleuchtungsvorrichtungen an die betrachtete Beleuchtungsvorrichtung übermittelt werden, für eine Entscheidung der betrachteten Beleuchtungsvorrichtung werden aber vorzugsweise alle Informationen verwendet. Liegt allerdings keine externen Informationen vor, so entscheidet die Einheit autonom, also unabhängig von den Informationen anderer Beleuchtungsvorrichtung, wie die Lichtintensität etc. einzustellen ist.

Weiters ist es noch zweckmäßig, wenn die Auswahl der Beleuchtungsvorrichtungen, an welche von einer Beleuchtungsvorrichtung Informationen übermittelt werden, objektspezifisch, d.h. von dem Objekttyp abhängig erfolgt.

Alternativ oder zusätzlich kann es von Vorteil sein, wenn die Auswahl der Beleuchtungsvorrichtungen, an welche von einer Beleuchtungsvorrichtung Informationen übermittelt werden, von der Position des Objektes in dem Beleuchtungssystem abhängig ist.

Bei einer konkreten Ausgestaltung der Erfindung ist vorgesehen, dass eine Beleuchtungsvorrichtung nur mit zu ihr benachbarten Beleuchtungsvorrichtungen kommuniziert.

Unter "benachbart" werden beispielsweise alle in einem bestimmten Umkreis befindlichen Leuchten bezeichnet, oder tatsächlich nur die unmittelbar benachbarten Leuchten, beispielsweise bei einer linienförmigen Anordnung der Beleuchtungsvorrichtungen nur die unmittelbar vor und unmittelbar nachher angeordnete Beleuchtungsvorrichtung.

Schließlich ist es auch noch günstig, wenn jede Beleuchtungsvorrichtung autonom entscheidet, an welche Beleuchtungsvorrichtungen sie von ihr selbst detektierte Informationen und/oder Informationen, welche sie von einer oder mehreren anderen Beleuchtungseinrichtungen erhalten hat, übermittelt.

Für den Fall, dass eine Beleuchtungsvorrichtung nur an benachbarte Beleuchtungsvorrichtungen sendet, entscheidet die Beleuchtungsvorrichtung somit, ob Informationen überhaupt übermittelt wird und ob empfangene Informationen weiter übermittelt werden.

Durch die Angabe von konkreten Lichtstärke-Werten in den Lichtprofilen ist keine Rechenarbeit notwendig, sondern es wird einfach der relevante Wert ausgelesen und für die Ansteuerung von einer oder mehreren Leuchten einer Beleuchtungsvorrichtung verwendet.

Es handelt sich bei einem Beleuchtungssystem nach der Erfindung um ein autarkes Netzwerk, ein Zentralrechner ist nicht notwendig und das Netzwerk ist beliebig erweiterbar.

Aktuelle Beleuchtungen sind ineffizient, da sie nicht die "richtige" Beleuchtungsstärke zur "richtigen" Zeit liefern können. Mit der vorliegenden Erfindung wird dies möglich, und es lässt sich sowohl der Energieverbrauch senken als auch die Beleuchtungsqualität steigern.

Außerdem lässt sich der Ausfall einzelner Leuchten durch Nachbarleuchten kompensieren, etwa in dem die Sensorvorrichtung dies detektiert (Abfall der Grundhelligkeit) und dies entsprechend bei anderen Leuchten berücksichtigt wird.

Als Lichtquellen können relativ beliebige Lichtquellen verwendet werden, besonders eignen sich aber Leuchtdioden, insbesondere sogenannte "Power LED's".

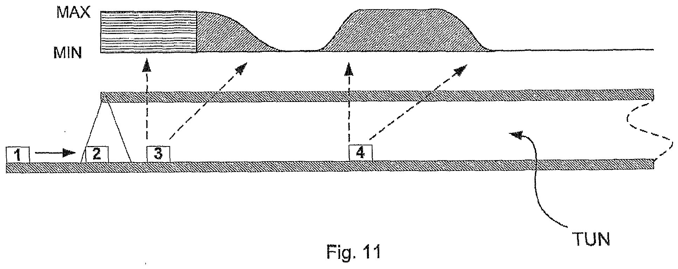

Figur 11 zeigt schließlich noch ein Beispiel eines Fahrzeuges vor (Position 1) einem Tunnel TUN, am Beginn des Tunnels (Pos. 2) und im Tunnel (Pos. 3, Pos. 4). Es wird hier angestrebt, dem Fahrer einen konstant beleuchteten Bereich vor dem Fahrzeug zu liefern. Der Tunneleingang ist immer auf konstantem, maximalem Niveau in Abhängigkeit von der Umgebungshelligkeit, aber unabhängig von der Position des Fahrzeuges beleuchtet (Pos. 1).

In Position 2 wird das Fahrzeug von der Sensorvorrichtung der ersten Beleuchtungsvorrichtung detektiert, und es werden entsprechend beispielsweise die nächsten 100 Meter im Tunnel konstant beleuchtet. Wird das Fahrzeug bei der Fortbewegung im Tunnel TUN vom nächsten Sensor detektiert, so wird eine weitere Leuchte dazugeschaltet, während die Leuchte bei dem gerade von dem Fahrzeug verlassenen Sensor in seiner Leuchtstärke reduziert wird.

In Position 4 sieht man schließlich noch die konstante Aura des Objektes, die sich mit diesem durch den Tunnel bewegt und die Position des Objektes in Bezug auf diese Aura.

## Patentansprüche

1. Beleuchtungssystem (SYS) umfassend eine Anzahl von Beleuchtungsvorrichtungen (LV, L1, L2, L3, ..., LN; L11, ..., L1N, L21, ..., L2N, LM1, ..., LMN), jede Beleuchtungsvorrichtung umfassend
a. zumindest eine Leuchte (LE),
b. zumindest eine Sensorvorrichtung (SEV) zur Detektion von Objekten (O1, O2, O3), welche derart ausgeführt ist, um einer Beleuchtungsvorrichtung (LV) Informationen zum Steuern der zumindest einen Leuchte (LE) zu liefern, wobei die zumindest eine Sensorvorrichtung (SEV) zur Erkennung des Objekttyps (Oid1, Oid2, ..., OidN) und zur Ermittlung der Entfernung des detektierten Objektes (O1, O2, O3) von der Sensorvorrichtung (SEV) eingerichtet ist,
c. zumindest einen Speicher (SPE), der zur Abspeicherung von zumindest einem Lichtprofil (LP1, LP2, ..., LPN) eingerichtet ist, wobei das zumindest eine Lichtprofil (LP1, LP2, ..., LPN) Lichtstärken-Werte (W11, ..., W1M; W21, ..., W2M; ...; WN1, ..., WNM) in Abhängigkeit von Objekttypen (Oid1, Oid2, ..., OidN) und Entfernung eines Objektes (O1, O2, O3) zu der zumindest einen Leuchte (LE) der Beleuchtungsvorrichtung (LV) enthält, und
d. zumindest eine Steuervorrichtung (STV), welche dazu eingerichtet ist, entsprechend den von der zumindest einen Sensorvorrichtung (SEV) stammenden Informationen betreffend den Objekttyp (Oid1, Oid2, ..., OidN) und die Entfernung eines erkannten Objektes die zumindest eine Leuchte (LE) mit einem entsprechenden Lichtstärke-Wert (W11, ..., W1M; W21, ..., W2M; ...; WN1, ..., WNM) anzusteuern, wobei jede Beleuchtungsvorrichtung (LV, L1, L2, L3, ..., LN; L11, ..., L1N, L21, ..., L2N, LM1, ..., LMN), abhängig vom detektierten Objekttyp (Oid1, Oid2, ..., OidN) und der Entfernung von der zumindest einen Leuchte einer Beleuchtungsvorrichtung, mit einer entsprechenden Lichtstärke angesteuert wird, und
e. zumindest eine Kommunikationseinrichtung (KOM) zur Kommunikation mit anderen Beleuchtungsvorrichtungen gleicher Art, **dadurch gekennzeichnet, dass**
f. der Speicher (SPE), die Sensorvorrichtung (SEV), die Kommunikationseinrichtung (KOM) und die Steuervorrichtung (STV) in die Beleuchtungsvorrichtung (LV) integriert sind,
g. wobei benachbarte Beleuchtungsvorrichtungen (LV, L1, L2, L3, ..., LN; L11, ..., L1N, L21, ..., L2N, LM1, ..., LMN) dazu ausgeführt sind, mittels ihrer Kommunikationsmittel (KOM) zum Austausch von Informationen miteinander zu kommunizieren,
h. wobei die von einer Beleuchtungsvorrichtung übermittelten Informationen zumindest Sensor-Informationen von ihrer zumindest einen Sensorvorrichtung (SEV) enthalten,
i. und wobei eine solche, von einer oder mehreren benachbarten Beleuchtungsvorrichtungen (LV, L1, L2, L3, ..., LN; L11, ..., L1N, L21, ..., L2N, LM1, ..., LMN) übermittelten Informationen empfangende, Beleuchtungsvorrichtung dazu eingerichtet ist, diese Informationen bei der Auswahl des Lichtstärke-Werts für ihre zumindest eine Leuchte zu berücksichtigen.

2. Beleuchtungssystem nach Anspruch 1, **dadurch gekennzeichnet, dass** der zumindest eine Speicher (SPE) für jeden Objekttyp (Oid1, Oid2, ..., OidN) ein eigenes Lichtprofil (LP1, LP2, ..., LPN) mit Lichtstärke-Werten (W11, ..., W1M; W21, ..., W2M; ...; WN1, ..., WNM) in Abhängigkeit von der Entfernung des zugehörigen Objektes (O1, O2, O3) von der zumindest einen Leuchte (LE) der Beleuchtungsvorrichtung (LV) enthält.

3. Beleuchtungssystem nach Anspruch 1 oder 2, **dadurch gekennzeichnet, dass** die Sensorvorrichtung (SEV) zur Detektion der Position eines detektierten Objektes (O1, O2, O3) eingerichtet ist, und die zumindest einen Steuervorrichtung (STV) dazu ausgeführt ist, entsprechend den von der zumindest einen Sensorvorrichtung (SEV) stammenden Informationen betreffend die Position des erkannten Objektes die zumindest eine Leuchte (LE) mit einem entsprechenden Lichtstärke-Wert (W11, ..., W1M; W21, ..., W2M; ...; WN1, ..., WNM) anzusteuern.

4. Beleuchtungssystem nach Anspruch 3, **dadurch gekennzeichnet, dass** die zumindest eine Sensorvorrichtung (SEV) weiters dazu eingerichtet ist, die Geschwindigkeit des detektierten Objektes (O1, O2, O3) und/oder die Bewegungsrichtung des Objektes (O1, O2, O3) zu detektieren, und die Steuervorrichtung (STV) dazu eingerichtet ist, die Ein- und Ausschaltgeschwindigkeit und/oder die Leuchtdauer der zumindest einen Leuchte (LE) der Beleuchtungsvorrichtung (LV) in Abhängigkeit von der Geschwindigkeit des detektierten Objektes (O1, O2, O3) und/oder der Bewegungsrichtung des Objektes (O1, O2, O3) und/oder der Position des Objektes (O1, O2, O3) einzustellen.

5. Beleuchtungssystem nach einem der Ansprüche 1 bis 4, **dadurch gekennzeichnet, dass** alle Beleuchtungsvorrichtungen (LV, L1, L2, L3, ..., LN; L11, ..., L1N, L21, ..., L2N, LM1, ..., LMN) des Beleuchtungssystems (SYS) dieselben Lichtprofile enthalten.

6. Beleuchtungssystem nach Anspruch 4 **dadurch gekennzeichnet, dass** jede Beleuchtungsvorrichtung dazu eingerichtet ist, in Abhängigkeit vom detektierten Objekttyp und/oder von der Position des Objektes und/oder der Bewegungsrichtung in dem Beleuchtungssystem jene Beleuchtungsvorrichtungen auszuwählen, an welche Informationen übermittelt werden.

7. Beleuchtungssystem nach einem der Ansprüche 1 bis 6, **dadurch gekennzeichnet, dass** eine Beleuchtungsvorrichtung dazu eingerichtet ist, nur mit zu ihr benachbarten Beleuchtungsvorrichtungen zu kommunizieren.

8. Verfahren zum Beleuchten einer zu beleuchtenden Örtlichkeit mit einem Beleuchtungssystem (SYS) umfassend eine Anzahl von Beleuchtungsvorrichtungen (LV, L1, L2, L3, ..., LN; L11, ..., L1N, L21, ..., L2N, LM1, ..., LMN), jede Beleuchtungsvorrichtung umfassend
a. zumindest eine Leuchte (LE),
b. zumindest eine Sensorvorrichtung (SEV) zur Detektion von Objekten (O1, O2, O3), welche einer Beleuchtungsvorrichtung (LV) Informationen zum Steuern der zumindest einen Leuchte (LE) liefern, wobei die zumindest eine Sensorvorrichtung (SEV) den Objekttyp (Oid1, Oid2, ..., OidN) und die Entfernung des detektierten Objektes (O1, O2, O3) von der Sensorvorrichtung (SEV) ermittelt,
c. zumindest einen Speicher (SPE), der zumindest ein Lichtprofil (LP1, LP2, ..., LPN) abspeichert, wobei das zumindest eine Lichtprofil (LP1, LP2, ..., LPN) Lichtstärken-Werte (W11, ..., W1M; W21, ..., W2M; ...; WN1, ..., WNM) in Abhängigkeit von Objekttypen (Oid1, Oid2, ..., OidN) und Entfernung eines Objektes (O1, O2, O3) zu der zumindest einen Leuchte (LE) der Beleuchtungsvorrichtung (LV) enthält, und
d. zumindest eine Steuervorrichtung (STV), welche entsprechend den von der zumindest einen Sensorvorrichtung (SEV) stammenden Informationen betreffend den Objekttyp (Oid1, Oid2, ..., OidN) und die Entfernung eines erkannten Objektes die zumindest eine Leuchte (LE) mit einem entsprechenden Lichtstärke-Wert (W11, ..., W1M; W21, ..., W2M; ...; WN1, ..., WNM) ansteuert, wobei jede Beleuchtungsvorrichtung (LV, L1, L2, L3, ..., LN; L11, ..., L1N, L21, ..., L2N, LM1, ..., LMN), abhängig vom detektierten Objekttyp (Oid1, Oid2, ..., OidN) und der Entfernung von der zumindest einen Leuchte einer Beleuchtungsvorrichtung, mit einer entsprechenden Lichtstärke angesteuert wird, und
e. zumindest eine Kommunikationseinrichtung (KOM), die mit anderen Beleuchtungsvorrichtungen gleicher Art kommuniziert,
**dadurch gekennzeichnet, dass**
f. der Speicher (SPE), die Sensorvorrichtung (SEV), die Kommunikationseinrichtung (KOM) und die Steuervorrichtung (STV) in die Beleuchtungsvorrichtung (LV) integriert sind,
g. benachbarte Beleuchtungsvorrichtungen (LV, L1, L2, L3, ..., LN; L11, ..., L1N, L21, ..., L2N, LM1, ..., LMN) mittels ihrer Kommunikationsmittel (KOM) zum Austausch von Informationen miteinander kommunizieren,
h. wobei die von einer Beleuchtungsvorrichtung übermittelten Informationen zumindest Sensor-Informationen von ihrer zumindest einen Sensorvorrichtung (SEV) enthalten,
i. und wobei eine solche, von einer oder mehreren benachbarten Beleuchtungsvorrichtungen (LV, L1, L2, L3, ..., LN; L11, ..., L1N, L21, ..., L2N, LM1, ..., LMN) übermittelten Informationen empfangende, Beleuchtungsvorrichtung diese Informationen bei der Auswahl des Lichtstärke-Werts für ihre zumindest eine Leuchte berücksichtigt.

9. Verfahren nach Anspruch 8, **dadurch gekennzeichnet, dass** die Sensorvorrichtung (SEV) zusätzlich die Position und die Bewegungsrichtung des detektierten Objektes (O1, O2, O3) ermittelt und die Steuervorrichtung (STV) entsprechend den Informationen betreffend den Objekttyp (Oid1, Oid2, ..., OidN), die Entfernung, die Position und die Bewegungsrichtung eines erkannten Objektes die zumindest eine Leuchte (LE) mit einem entsprechenden Lichtstärke-Wert (W11, ..., W1M; W21, ..., W2M; ...; WN1, ..., WNM) ansteuert, wobei jede Beleuchtungsvorrichtung (LV, L1, L2, L3, ..., LN; L11, ..., L1N, L21, ..., L2N, LM1, ..., LMN) abhängig vom detektierten Objekttyp (Oid1, Oid2, ..., OidN) sowie der Position, der Bewegungsrichtung und der Entfernung des Objektes von der zumindest einen Leuchte der Beleuchtungsvorrichtung mit einem entsprechenden Lichtstärke-Wert angesteuert wird.

10. Verfahren nach Anspruch 8 oder 9, **dadurch gekennzeichnet, dass** eine Beleuchtungsvorrichtung jene Beleuchtungsvorrichtungen, an welche sie Informationen übermittelt, objektspezifisch, d.h. von dem Objekttyp abhängig auswählt, und/oder in Abhängigkeit von der Position des Objektes in dem Beleuchtungssystem auswählt.

11. Verfahren nach einem der Ansprüche 8 bis 10, **dadurch gekennzeichnet, dass** eine Beleuchtungsvorrichtung nur mit zu ihr benachbarten Beleuchtungsvorrichtungen kommuniziert.

12. Verfahren nach einem der Ansprüche 8 bis 11, **dadurch gekennzeichnet, dass** jede Beleuchtungsvorrichtung autonom entscheidet, an welche Beleuchtungsvorrichtungen sie selbst detektierte Informationen und/oder Informationen, welche sie von einer oder mehreren anderen Beleuchtungseinrichtungen erhalten hat, übermittelt.

## Claims

1. An illumination system (SYS) comprising a number of illumination devices (LV, L1, L2, L3, ..., LN; L11, L21, ..., L2N, LM1, ..., LMN), each illumination device comprising
a. at least one light fixture (LE),
b. at least one sensor device (SEV) for detecting objects (O1, O2, O3), which is designed in such a manner to supply information to the illumination device (LV) to control the at least one light fixture (LE), wherein the at least one sensor device (SEV) is configured to detect the object type (Oid1, Oid2, ..., OidN) and determine the distance of the detected object (O1, O2, O3) from the sensor device (SEV);
c. at least one memory (SPE) configured to store at least one light profile (LP1, LP2, ..., LPN) wherein the at least one light profile (LP1, LP2, ..., LPN) contains luminous intensity values (W11, ..., W1M; W21, ..., W2M; ...; WN1, ..., WNM) as a function of object types (Oid1, Oid2, ..., OidN) and the distance of an object (O1, O2, O3) from the at least one light fixture (LE) of the illumination device (LV), and
d. at least one control device (STV) which is adapted to control the at least one light fixture (LE) with a corresponding luminous intensity value (W11, ..., W1M; W21, ..., W2M; ...; WN1, ..., WNM) in accordance with the information concerning the object type (Oid1, Oid2, ..., OidN) and the distance of a detected object based on the information originating from the at least one sensor device. (SEV), wherein each illumination device (LV, L1, L2, L3, ..., LN; L11, L21, ..., L2N, LM1, ..., LMN) is controlled with a corresponding luminous intensity depending on the detected object type (Oid1, Oid2, ..., OidN) and the distance of the at least one light fixture of an illumination device and
e. at least one communication device (KOM) for communicating with other illumination devices of the same kind,
**characterized in that**
f. the memory (SPE), the sensor device (SEV), the communication device (KOM) and the control device (STV) are integrated in the illumination device (LV),
g. wherein neighbouring illumination devices (LV, L1, L2, L3, ..., LN; L11, L21, ..., L2N, LM1, ..., LMN) are designed to communicate with one another by means of their communication means (KOM) to exchange information,
h. wherein the information transmitted by the illumination device at least contains sensor information from its at least one sensor device (SEV),
i. and wherein an illumination device receiving information transmitted by one or more neighbouring illumination devices (LV, L1, L2, L3, ..., LN; L11, L21, ..., L2N, LM1, ..., LMN) is adapted to take into account this information when selecting the luminous intensity value for its at least one light fixture.

2. The illumination device according to claim 1, **characterized in that** the at least one memory (SPE) contains for each object type (Oid1, Oid2, ..., OidN) its own light profile (LP1, LP2, ..., LPN) with luminous intensity values (W11, ..., W1M; W21, ..., W2M; ...; WN1, ..., WNM) depending on the distance of the appurtenant object (O1, O2, O3) from the at least one light fixture (LE) of the illumination device (LV) .

3. The illumination device according to claim 1 or 2, **characterized in that** the sensor device (SEV) is configured to detect the position of a detected object (O1, O2, O3) and the at least one control device (STV) is designed to control the at least one light fixture (LE) with a corresponding luminous intensity value (W11, ..., W1M; W21, ..., W2M; ...; WN1, ..., WNM) according to the invention relating to the position of the detected object originating from the at least one sensor device (SEV).

4. The illumination device according to claim 3, **characterized in that** the at least one sensor device (SEV) is further configured to detect the speed of the detected object (O1, O2, O3) and/or the direction of movement of the object (O1, O2, O3) and the control device (STV) is configured to adjust the switch-on and switch-off speed and/or the illumination time of the at least one light fixture (LE) of the illumination device (LV) as a function of the speed of the detected object (O1, O2, O3) and/or the direction of movement of the object (O1, O2, O3), and/or the position of the object (O1, O2, O3).

5. The illumination system according to any one of claims 1 to 4, **characterized in that** all the illumination devices (LV, L1, L2, L3, ..., LN; L11, L21, ..., L2N, LM1, ..., LMN) of the illumination system (SYS) have the same light profiles.

6. The illumination device according to claim 4, **characterized in that** each illumination device is adapted to select those illumination devices to which information is transmitted depending on the detected object type and/or the position of the object and/or the direction of movement in the illumination system.

7. The illumination system according to any one of claims 1 to 6, **characterized in that** an illumination device is adapted to communicate only with neighbouring illumination devices.

8. A method for illuminating a location to be illuminated with an illumination system (SYS) comprising a number of illumination devices (LV, L1, L2, L3, ..., LN; L11, L21, ..., L2N, LM1, ..., LMN), each illumination device comprising
a. at least one light fixture (LE),
b. at least one sensor device (SEV) for detecting objects (O1, O2, O3), which supply information to an illumination device (LV) to control the at least one light fixture (LE), wherein the at least one sensor device (SEV) determines the object type (Oid1, Oid2, ..., OidN) and the distance of the detected object (O1, O2, O3) from the sensor device (SEV);
c. at least one memory (SPE) which stores at least one light profile (LP1, LP2, ..., LPN) wherein the at least one light profile (LP1, LP2, ..., LPN) contains luminous intensity values (W11, ..., W1M; W21, ..., W2M; ...; WN1, ..., WNM) as a function of object types (Oid1, Oid2, ..., OidN) and the distance of an object (O1, O2, O3) from the at least one light fixture (LE) of the illumination device (LV), and
d. at least one control device (STV) which controls the at least one light fixture (LE) with a corresponding luminous intensity value (W11, ..., W1M; W21, ..., W2M; ...; WN1, ..., WNM) in accordance with the information concerning the object type (Oid1, Oid2, ..., OidN) and the distance of a detected object based on the information originating from the at least one sensor device. (SEV), wherein each illumination device (LV, L1, L2, L3, ..., LN; L11, L21, ..., L2N, LM1, ..., LMN) is controlled with a corresponding luminous intensity depending on the detected object type (Oid1, Oid2, ..., OidN) and the distance of the at least one light fixture of an illumination device and
e. at least one communication device (KOM) for communicating with other illumination devices of the same kind,
**characterized in that**
f. the memory (SPE), the sensor device (SEV), the communication device (KOM) and the control device (STV) are integrated in the illumination device (LV),
g. neighbouring illumination devices (LV, L1, L2, L3, ..., LN; L11, L21, ..., L2N, LM1, ..., LMN) communicate with one another by means of their communication means (KOM) to exchange information,
h. wherein the information transmitted by the illumination device at least contains sensor information from its at least one sensor device (SEV),
i. and wherein such an illumination device receiving information transmitted by one or more neighbouring illumination devices (LV, L1, L2, L3, ..., LN; L11, L21, ..., L2N, LM1, ..., LMN) takes into account this information when selecting the luminous intensity value for its at least one light fixture.

9. The method according to claim 8, **characterized in that** the sensor device (SEV) additionally determines the position and direction of movement of the detected object (O1, O2, O3) and the control device (STV) controls the at least one light fixture (LE) with a corresponding luminous intensity value (W11, ..., W1M; W21, ..., W2M; ...; WN1, ..., WNM) according to the information relating to the object type (Oid1, Oid2, ..., OidN), the distance, the position and the direction of movement of a detected object, wherein each illumination device (LV, L1, L2, L3, ..., LN; L11, L21, ..., L2N, LM1, ..., LMN) is controlled with a corresponding luminous intensity value depending on the detected object (Oid1, Oid2, ..., OidN) as well as the position, the direction of movement and the distance of the object from the at least one light fixture of the illumination device.

10. Method according to claim 8 or 9, **characterized in that** an illumination device selects those illumination devices to which it transmits information object-specifically, i.e. depending on the type of object and/or depending on the position of the object in the illumination system.

11. The method according to one of claims 8 to 10, **characterized in that** an illumination device only communicates with its neighbouring illumination devices.

12. The method according to one of claims 8 to 11, **characterized in that** each illumination device decides autonomously to which illumination device it transmits self-detected information and/or information which it has obtained from one or more other illumination devices.

## Revendications

1. Système d'éclairage (SYS) comprenant un nombre de dispositifs d'éclairage (LV, L1, L2, L3, ..., LN ; L11, ..., L1N, L21, ..., L2N, LM1, ..., LMN), chaque dispositif d'éclairage comprenant
a. au moins une lampe (LE),
b. au moins un dispositif de capteurs (SEV) destiné à détecter des objets (O1, O2, O3), lesquels sont réalisés de sorte à fournir à un dispositif d'éclairage (LV) des informations pour commander au moins une lampe (LE), l'au moins un dispositif de capteurs (SEV) étant aménagé pour identifier le type d'objet (Oid1, Oid2, ..., OidN) et pour déterminer la distance de l'objet (O1, O2, O3) détecté par le dispositif de capteurs (SEV),
c. au moins une mémoire (SPE) qui est aménagée pour mémoriser au moins un profil lumineux (LP1, LP2, ..., LPN), l'au moins un profil lumineux (LP1, LP2, ..., LPN) contenant des valeurs d'intensité lumineuse (W11, ..., W1M ; W21, ..., W2M ; ... ; WN1, ..., WNM) en fonction de types d'objets (Oid1, Oid2, ..., OidN) et de la distance d'un objet (O1, O2, O3) par rapport à l'au moins une lampe (LE) du dispositif d'éclairage (LV) et
d. au moins un dispositif de commande (STV), qui est aménagé pour, en fonction des informations provenant de l'au moins un dispositif de capteurs (SEV) concernant le type d'objet (Oid1, Oid2, ..., OidN) et de la distance d'un objet identifié amorcer au moins une lampe (LE) avec une valeur d'intensité lumineuse (W11, ..., W1M ; W21, ..., W2M ; ... ; WN1, ..., WNM) correspondante, chaque dispositif d'éclairage (LV, L1, L2, L3, ..., LN ; L11, ..., L1N, L21, ..., L2N, LM1, ..., LMN) étant amorcé en fonction du type d'objet (Oid1, Oid2, ..., OidN) détecté et de la distance par rapport à l'au moins une lampe d'un dispositif d'éclairage, avec une intensité lumineuse correspondante et
e. au moins un système de communication (KOM) destiné à communiquer avec d'autres dispositifs d'éclairage de même nature,
**caractérisé en ce que**
f. la mémoire (SPE), le dispositif de capteurs (SEV), le système de communication (KOM) et le dispositif de commande (STV) sont intégrés dans le dispositif d'éclairage (LV),
g. des dispositifs d'éclairage (LV, L1, L2, L3, ..., LN ; L11, ..., L1N, L21, ..., L2N, LM1, ..., LMN) voisins étant réalisés pour communiquer les unes avec les autres à l'aide de leurs moyens de communication (KOM) pour échanger des informations,
h. les informations transmises par un dispositif d'éclairage contenant au moins des informations de capteurs de la part de leur au moins un dispositif de capteurs (SEV),
i. et un tel dispositif d'éclairage réceptionnant des informations par un ou plusieurs dispositifs d'éclairage (LV, L1, L2, L3, ..., LN ; L11, ..., L1N, L21, ..., L2N, LM1, ..., LMN) voisins étant aménagé pour prendre en compte lesdites informations lors de la sélection de la valeur d'intensité lumineuse pour son au moins une lampe.

2. Système d'éclairage selon la revendication 1, **caractérisé en ce que** l'au moins une mémoire (SPE) contient pour chaque type d'objet (Oid1, Oid2, ..., OidN) un propre profil lumineux (LP1, LP2, ..., LPN) avec des valeurs d'intensité lumineuse (W11, ..., W1M ; W21, ..., W2M ; ... ; WN1, ..., WNM) en fonction de la distance de l'objet (O1, O2, O3) associé par rapport à l'au moins une lampe (LE) du dispositif d'éclairage (LV).

3. Système d'éclairage selon la revendication 1 ou 2, **caractérisé en ce que** le dispositif de capteurs (SEV) est aménagé pour détecter la position d'un objet (O1, 02, 03) détecté, et l'au moins un dispositif de commande (STV) est réalisé pour amorcer, en fonction des informations provenant de l'au moins un dispositif de capteurs (SEV) concernant la position de l'objet identifié, l'au moins une lampe (LE) avec une valeur d'intensité lumineuse (W11. ...1 W1M ; W21, ..., W2M ; ... ; WN1, ..., WNM) correspondante.

4. Système d'éclairage selon la revendication 3, **caractérisé en ce que** l'au moins un dispositif de capteurs (SEV) est aménagé en outre pour détecter la vitesse de l'objet (O1, O2, O3) détecté et/ou la direction de déplacement de l'objet (O1, O2, O3), et le dispositif de commande (STV) est aménagé pour régler la vitesse d'allumage et la vitesse d'extinction et/ou la durée d'éclairage de l'au moins une lampe (LE) du dispositif d'éclairage (LV) en fonction de la vitesse de l'objet (O1, O2, O3) détecté et/ou de la direction de déplacement de l'objet (O1, O2, O3) et/ou de la position de l'objet (O1, O2, O3).

5. Système d'éclairage selon l'une quelconque des revendications 1 à 4, **caractérisé en ce que** tous les dispositifs d'éclairage (LV, L1, L2, L3, ..., LN ; L11, ..., L1N, L21, ..., L2N. LM1,... , LMN) du système d'éclairage (SYS) contiennent les mêmes profils lumineux.

6. Système d'éclairage selon la revendication 4, **caractérisé en ce que** chaque dispositif d'éclairage est aménagé pour sélectionner, en fonction du type d'objet détecté et/ou de la position de l'objet et/ou de la direction de déplacement dans le système d'éclairage les dispositifs d'éclairage auxquels sont transmises des informations.

7. Système d'éclairage selon l'une quelconque des revendications 1 à 6, **caractérisé en ce qu'**un dispositif d'éclairage est aménagé pour ne communiquer qu'avec des dispositifs d'éclairage qui lui sont voisins.

8. Procédé destiné à éclairer une localité qui doit être éclairée avec un système d'éclairage (SYS) comprenant un nombre de dispositifs d'éclairage (LV, L1, L2, L3, ..., LN ; L11, ..., L1N, L21, ..., L2N, LM1, ..., LMN), chaque dispositif d'éclairage comprenant
a. au moins une lampe (LE),
b. au moins un dispositif de capteurs (SEV) destiné à détecter des objets (O1, O2, O3), lesquels sont réalisés de sorte à fournir à un dispositif d'éclairage (LV) des informations pour commander au moins une lampe (LE), l'au moins un dispositif de capteurs (SEV) étant aménagé pour identifier le type d'objet (Oid1, Oid2, ..., OidN) et pour déterminer la distance de l'objet (O1, O2, O3) détecté par le dispositif de capteurs (SEV),
c. au moins une mémoire (SPE) qui est aménagée pour mémoriser au moins un profil lumineux (LP1, LP2, ..., LPN), l'au moins un profil lumineux (LP1, LP2, ..., LPN) contenant des valeurs d'intensité lumineuse (W11, ..., W1M ; W21, ..., W2M ; ... ; WN1, ..., WNM) en fonction de types d'objets (Oid1, Oid2, ..., OidN) et de la distance d'un objet (O1, O2, O3) par rapport à l'au moins une lampe (LE) du dispositif d'éclairage (LV) et
d. au moins un dispositif de commande (STV), qui est aménagé pour, en fonction des informations provenant de l'au moins un dispositif de capteurs (SEV) concernant le type d'objet (Oid1, Oid2, ..., OidN) et de la distance d'un objet identifié amorcer au moins une lampe (LE) avec une valeur d'intensité lumineuse (W11, ..., W1M ; W21, ..., W2M ; ... ; WN1, ..., WNM) correspondante, chaque dispositif d'éclairage (LV, L1, L2, L3, ..., LN ; L11, ..., L1N, L21, ..., L2N, LM1, ..., LMN) étant amorcé en fonction du type d'objet (Oid1, Oid2, ..., OidN) détecté et de la distance par rapport à l'au moins une lampe d'un dispositif d'éclairage, avec une intensité lumineuse correspondante et
e. au moins un système de communication (KOM) destiné à communiquer avec d'autres dispositifs d'éclairage de même nature,
**caractérisé en ce que**
f. la mémoire (SPE), le dispositif de capteurs (SEV), le système de communication (KOM) et le dispositif de commande (STV) sont intégrés dans le dispositif d'éclairage (LV),
g. des dispositifs d'éclairage (LV, L1, L2, L3, ..., LN ; L11, ..., L1N, L21, ..., L2N, LM1, ..., LMN) voisins communiquent les uns avec les autres à l'aide de leurs moyens de communication (KOM) pour échanger des informations,
h. les informations transmises par un dispositif d'éclairage contenant au moins des informations de capteurs de la part de leur au moins un dispositif de capteurs (SEV),
i. et un tel dispositif d'éclairage réceptionnant des informations par un ou plusieurs dispositifs d'éclairage (LV, L1, L2, L3, ..., LN ; L11, ..., L1N, L21, ..., L2N, LM1, ..., LMN) voisins prenant en compte lesdites informations lors de la sélection de la valeur d'intensité lumineuse pour son au moins une lampe.

9. Procédé selon la revendication 8, **caractérisé en ce que** le dispositif de capteurs (SEV) détermine en supplément la position et la direction de déplacement de l'objet (O1, O2, O3) détecté et en fonction des informations concernant le type d'objet (Oid1, Oid2, ..., OidN), la distance, la position et la direction de déplacement d'un objet identifié, le dispositif de commande (STV) amorce l'au moins une lampe (LE) avec une valeur d'intensité lumineuse (W11, ..., W1M ; W21, ..., W2M ; ... ; WN1, ..., WNM) correspondante, chaque dispositif d'éclairage (LV, L1, L2, L3, .... , LN ; L11, ..., L1N, L21, ..., L2N, LM1, ..., LMN) étant amorcé avec une valeur d'intensité lumineuse correspondante en fonction du type d'objet (Oid1, Oid2, ... , OidN) détecté, ainsi que de la position, de la direction de déplacement et de la distance de l'objet par rapport à l'au moins une lampe du dispositif d'éclairage.

10. Procédé selon la revendication 8 ou 9, **caractérisé en ce qu'**un dispositif d'éclairage sélectionne les dispositifs d'éclairage auxquels il transmet des informations de manière spécifique à l'objet, c'est-à-dire en fonction du type d'objet et/ou en fonction de la position de l'objet dans le système d'éclairage.

11. Procédé selon l'une quelconque des revendications 8 à 10, **caractérisé en ce qu'**un dispositif d'éclairage ne communique qu'avec les dispositifs d'éclairage qui lui sont voisins.

12. Procédé selon l'une quelconque des revendications 8 à 11, **caractérisé en ce que** chaque dispositif d'éclairage décide de manière autonome, à quels dispositifs d'éclairage il transmet des informations détectées par ses propres soins et/ou des informations qu'il a obtenues de la part d'un ou de plusieurs autres dispositifs d'éclairage.
